(19) Europäisches Patentamt
European Patent Office
Office européen des brevets

(11) EP 2 123 448 A1

(12) **EUROPEAN PATENT APPLICATION**
published in accordance with Art. 153(4) EPC

(43) Date of publication:
**25.11.2009 Bulletin 2009/48**

(21) Application number: **08721735.2**

(22) Date of filing: **10.03.2008**

(51) Int Cl.:
***B32B 17/06*** (2006.01) ***B32B 17/10*** (2006.01)
***B60J 1/00*** (2006.01) ***B60S 1/02*** (2006.01)
***C03C 17/28*** (2006.01) ***C03C 27/12*** (2006.01)
***C09D 7/12*** (2006.01) ***C09D 183/06*** (2006.01)

(86) International application number:
**PCT/JP2008/054319**

(87) International publication number:
**WO 2008/111564 (18.09.2008 Gazette 2008/38)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.03.2007 JP 2007060561**
**20.04.2007 JP 2007112122**

(71) Applicant: **Nippon Sheet Glass Co., Ltd.**
**Tokyo 108-6321 (JP)**

(72) Inventor: **KAYANOKI, Hisayuki**
**Tokyo 108-6321 (JP)**

(74) Representative: **Hart-Davis, Jason et al**
**Cabinet Beau de Loménie,**
**158, rue de l'Université**
**75340 Paris Cedex 07 (FR)**

(54) **AUTOMOBILE WINDOW MATERIAL, AUTOMOBILE, ANTIFOG TREATMENT COATING LIQUID AND ANTIFOG ARTICLE**

(57) The present invention relates to an automobile window material that can be prevented from suffering from fogging even when exposed to outside air having a considerably low temperature, as well as an automobile having such a window material. The automobile window material is configured to be affixed to an opening of an automobile, and includes a substrate and a coating film provided on that surface of the substrate which faces to an interior of the automobile when affixed to the opening of the automobile. The coating film contains a surfactant capable of adsorbing and holding water vapor and a hydrophilic organic material.

Fig. 1

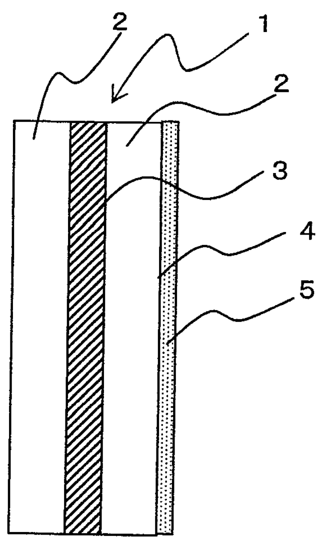


EP 2 123 448 A1

## Description

### FIELD OF THE INVENTION

The present invention relates to automobile window materials and automobiles and, more particularly, to automobile window materials which hardly suffer from fogging. The present invention also relates to coating solutions for anti-fogging treatment and anti-fogging articles and, more particularly, to anti-fogging articles having an anti-fogging coating film which exhibits both high levels of anti-fogging property and wear resistance, and coating solutions for anti-fogging treatment which are capable of preparing such a coating film.

### BACKGROUND ART

A variety of proposals have been hitherto made for prevention of fogging of an automobile window glass which may frequently occur in the winter season. For example, there is known a laminated glass having glass plates laminated together through an intermediate film which exhibits a total thermal resistance of 0.014 to 0.25 $m^2K/W$ (for example, refer to Patent Document 1).

Also, there is known is a window glass having, on its surface, a water-absorbing film which is capable of absorbing water in an amount of 2 $g/m^2$ or more and which has a rate of change in a contact angle of -0.140°/s or more as measured until the contact angle of a water droplet (0.8 $nm^3$) dropped on the film reaches 5° (for example, refer to Patent Document 2). In the Patent Document 2, a water-absorbing polymer layer is described as a specific example of the water-absorbing film.

Incidentally, moisture in atmospheric air is deposited and condensed on a transparent substrate made of a glass or plastic material due to a difference in temperature between the inner and outer surfaces thereof. As a result, fogging occurs on the transparent substrate. Thus, the working efficiency when using the substrate is adversely affected. In the case of windshields for automobiles and airplanes, spectacles and reflection mirrors, occurrence of the fogging may impair safety.

A number of techniques for imparting an anti-fogging property to a substrate are known. For example, there are known various methods such as a method in which a surfactant is applied to the substrate, a method in which a surface of the substrate is hydrophilized, and a method in which a surface of the substrate is roughened. These methods, however, have defects in any of the performances of scratch resistance, initial anti-fogging property, retention of anti-fogging property and adhesion property.

Various proposals have been made to solve the above problems and to satisfy all of scratch resistance, initial anti-fogging property, retention of anti-fogging property and adhesion property.

For example, there is proposed a coating solution for anti-fogging treatment containing, as a resin component, a homopolymer having repeating units derived from an ethylenic monomer having a hydroxyl group in its side chain or a copolymer containing the above repeating units and other repeating units derived from an ethylenic monomer having an epoxy group, an alkoxycarbonyl group, a carboxyl group, an amide group or an amino group in its side chain (refer to Patent Document 3).

Also, there are proposed a coating agent of a two-part liquid hardening type for forming an anti-fogging film which includes a coating agent containing an isocyanate component and a coating agent containing a polyol compound and a surfactant having a group reactive with the isocyanate (refer to Patent Document 4), a coating agent for forming an anti-fogging film which contains a mixture of an organic isocyanate, a water-absorbing polyol, an acrylpolyol and an active hydrogen group-containing surfactant, and a solvent (refer to Patent Document 5), and a polymerizable anti-fogging composition which contains an urethane bond-containing glycerol (meth)acrylate compound and an inorganic alkoxide (refer to Patent Document 6).

Patent Document 1: JP 2006-137648A
Patent Document 2: JP 2006-001056A
Patent Document 3: JP 2006-225614A
Patent Document 4: JP 2005-29723A
Patent Document 5: JP 2006-169440A
Patent Document 6: JP 2006-306995A

## DISCLOSURE OF THE INVENTION

## PROBLEMS TO BE SOLVED BY THE INVENTION

The laminated glass disclosed in Patent Document 1 tends to hardly suffer from fogging even when an outside air temperature is lowered, because of an increased total thermal resistance of the automobile window glass. However, the laminated glass has a problem that fogging occurs when the outside air temperature is considerably lowered and the temperature of an interior surface of the laminated glass becomes lower than the dew point.

The laminated glass disclosed in Patent Document 1, which is composed of glass plates each having a uniform thickness and an intermediate film having a uniform thickness, has also a problem that, during running in the rain, a temperature of the interior surface of the window glass often decreases in regions at which rain drops are not removed with a wiper (non-wiped regions) to cause fogging.

Further, when the laminated glass disclosed in Patent Document 1 is used as an automobile windshield, the windshield glass is maintained in a state which tends to cause fogging during the actual running. Therefore, it is necessary to remove the fogging on the windshield glass by operating a defroster, etc., in order to ensure the driver's sight. Thus, the laminated glass has a problem that it cannot solve increase of fuel consumption caused by electric power consumption.

The window plate disclosed in Patent Document 2 has such a problem that when moisture is present in an amount in excess of the absorbing capacity of the water-absorbing polymer layer, fogging occurs similarly to the ordinary glass which has not been subjected to anti-fogging treatment.

Further, when the window plate disclosed in Patent Document 2 is used as an automobile windshield, the windshield glass is still maintained in a state which tends to cause fogging during the actual running. Therefore, it is necessary to remove the fogging on the windshield glass by operating a defroster, etc., in order to ensure the driver's sight. Thus, the laminated glass has a problem that it cannot solve increase of fuel consumption caused by electric power consumption.

The anti-fogging coating film obtained using the coating solution for anti-fogging treatment proposed in any of Patent Documents 3 to 6 is unsatisfactory with respect to wear resistance. When the crosslinking degree at a surface region of the film is increased for the purpose of improving the wear resistance, the hydrophilic sites of the surface of the coating film are decreased so that the anti-fogging property is reduced. In this circumstance, there is a demand for a coating solution for anti-fogging treatment which is capable of forming an anti-fogging coating film exhibiting an improved wear resistance without reducing an anti-fogging performance thereof.

It is an object of the present invention to provide an automobile window material which hardly suffers from fogging even when exposed to a condition in which the outside air temperature is considerably low, and an automobile having such a window material. The present invention also provides an anti-fogging article having an anti-fogging coating film which exhibits both high levels of anti-fogging property and wear resistance, and a coating solution for anti-fogging treatment which is capable of producing such a coating film.

## MEANS FOR SOLVING THE PROBLEMS

To solve the above problems, the present invention provides an automobile window material configured to be affixed to an opening of an automobile, which includes a substrate and a coating film provided on the surface of the substrate facing to an interior of the automobile when affixed to the opening of the automobile, wherein the coating film contains a surfactant capable of adsorbing and holding water vapor, and a hydrophilic organic material.

## EFFECT OF THE INVENTION

The automobile window material of the present invention is configured to be affixed to an opening of an automobile. Since the window material has a coating film provided on the surface of the window material facing to an interior of the automobile and since the coating film contains a surfactant capable of adsorbing and holding water vapor and a hydrophilic organic material, the window material hardly suffers from fogging even when exposed to a condition in which the outside air temperature is considerably lowered.

## BRIEF DESCRIPTION OF THE DRAWINGS

FIG. 1 is a cross-sectional view of an automobile window material according to the present invention.

FIG. 2 is a psychrometric chart showing a relationship between the temperature (dry bulb temperature), the relative humidity and the absolute temperature.

FIG. 3 shows graphs schematically showing the temperature and humidity of the atmosphere near a glass surface in the case where the glass with a surface temperature maintained at 0°C is disposed in the atmosphere having a temperature of 23°C and a humidity of 30% RH.

FIG. 4 is a schematic view of a device for evaluating anti-fogging property.

EXPLANATION OF REFERENCE NUMERALS

1: Automobile window material (automobile window glass)
2: Glass plate
3: Intermediate film
4: Surface of substrate
5: Coating film
6: Device for evaluating anti-fogging property
7; 9: Box
8: Anti-fogging article (glass)
10: Video camera

BEST MODE FOR CARRYING OUT THE INVENTION

The automobile window material of the present invention will be described below with reference to FIG. 1. FIG. 1 is a cross-sectional view of the automobile window material of the present invention. The window material of the present invention may be broadly classified into a window glass and a resin window depending upon the kind of raw material used therefor. FIG. 1 depicts an example of the window material as a window glass.

Referring to FIG. 1, designated as 1 is an automobile window material according to the present invention. The window material 1 includes a structural member (substrate) having two glass plates 2 and an intermediate film 3 sandwiched between and bonded to the two glass plates 2, and a coating film 5 which is provided on the surface 4 of the substrate facing to an interior of the automobile when the automobile window material 1 is affixed to an opening of the automobile, and contains a surfactant capable of adsorbing and holding water vapor and a hydrophilic organic material. Owing to the water vapor adsorbing and holding effect of the surfactant, the coating film 5 containing the surfactant capable of adsorbing and holding water vapor and the hydrophilic organic material can prevent fogging of the interior surface of the automobile window material, even when the window material 1 is exposed to an environment in which the temperature of the interior surface of the window material 1 is lower than the dew point.

A capacity of the coating film for adsorbing and holding water vapor, more specifically, an amount of water vapor capable of being adsorbed and held by the surfactant, is preferably not less than the amount of water vapor that condenses on a coating film forming surface when an absolute temperature on the coating film forming surface is lower by 0.0001 kg/kg D. A. ("D. A." refers to "dry air") than an absolute temperature T (kg/kg D. A.) at which the ambient atmosphere on the side of the coating film forming surface becomes saturated with water vapor, and the capacity is preferably not more than the amount of water vapor that condenses on the coating film forming surface when the absolute temperature on the coating film forming surface is lower by 0.030 kg/kg D. A. than the absolute temperature T.

The amount of water vapor capable of being adsorbed and held by the coating film of the automobile window material of the present invention will be described in more detail.

FIG. 2 is a psychrometric chart showing a relationship between the temperature (dry bulb temperature), the relative humidity and the absolute temperature. Here, the absolute temperature is a value representing the amount of water vapor contained in 1 kg of dry air. For example, about 0.0052 kg (5.2 g) of water vapor is contained in 1 kg of air under conditions including a temperature of 23°C and a humidity (relative humidity) of 30% RH.

The temperature (dew point) at which air having an absolute temperature of 0.0052 kg/kg D. A. has a relative humidity of 100% RH, namely the air becomes saturated, is about 4.5°C as seen in FIG. 2. The temperature (dew point) at which the relative humidity of air having an absolute temperature of 0.0040 kg/kg D. A., which is lower by 0.0012 kg/kg D. A. than 0.0052 kg/kg D. A., becomes 100% RH is 0°C.

FIG. 3 shows graphs schematically showing the temperature and humidity of the atmosphere near a glass surface in the case where the glass with a surface temperature maintained at 0°C is disposed in the atmosphere having a temperature of 23°C and a humidity (relative humidity) of 30% RH (absolute temperature of 0.0052 kg/kg D. A.) of an inside of an automobile in which the temperature and humidity are under control. In each of the graphs in FIG. 3, the abscissa represents a distance from the glass surface. In the atmosphere at a temperature of 23°C, the temperature gradually decreases when the distance from the glass surface decreases below a predetermined value and becomes 0°C at the glass surface. In this case, the relative humidity in the atmosphere is 30% RH when the distance from the

glass surface is the predetermined value. The humidity gradually increases when the distance from the glass surface decreases below the predetermined value. A relative humidity of 100% RH is finally reached when the distance decreases to a level at which the temperature is 4.5°C (dew point). In a region where the temperature is below 4.5°C, the atmosphere contains water vapor beyond the saturation. Thus, water vapor condenses on the glass surface.

Thus, the amount of water vapor condensing on a coating film forming surface when a temperature on the coating film forming surface is lower by 0.0012 kg/kg D. A. than an absolute temperature T of the ambient atmosphere on the side of the coating film forming surface is specifically represented by an amount of water vapor condensing on the coating film forming surface when the coating film forming surface with a surface temperature maintained at 0°C is disposed in the atmosphere having a temperature of 23°C and a humidity (relative humidity) of 30% RH.

The foregoing explanation for the capacity for adsorbing and holding water vapor has been made in the case of a condition in which the absolute temperature T is 0.0052 kg/kg D. A. The amount of water vapor condensing on a coating film forming surface when the absolute temperature thereon is lower than 0.0012 kg/kg D. A. than the absolute temperature T is nearly constant even if the absolute temperature T is varied. Although the foregoing description has been made in the case where the absolute temperature on the coating film forming surface is lower by 0.0012 kg/kg D. A. than the absolute temperature T, it is evident that such a description also applies to the case where the absolute temperature thereon is lower by 0.0001 kg/kg D. A. or by 0.0030 kg/kg D. A. than the absolute temperature T.

The substrate used in the present invention is not limited as long as it is suitable for use as a window material for automobiles. Thus, a glass plate or a resin plate may be used. More specifically, as the substrate, there may be used a laminate (laminated glass) having a plurality of glass plates bonded together through an intermediate film or films made of a resin such as a polyvinylbutyral resin; an air-cooled tempered glass; a chemically tempered glass; a single or laminate resin plate formed of a resin such as polycarbonates; a laminate (resin laminated glass) having glass and resin plates bonded together through an intermediate film or films; and a laminate (film-bearing glass) having a glass plate and a resin film applied to a surface of the glass plate. Among these substrates, the laminated glass, resin plate and resin laminated glass have a thermal conductivity lower than that of a soda-lime-silica glass with the same thickness as that of the substrates. Therefore, when such a substrate is used for the window material (window glass), the surface of the window material which faces to an interior of the automobile is maintained at a relatively high temperature even if the temperature of an exterior surface thereof is lowered and, accordingly, has a less tendency to suffer from fogging.

When a laminate (laminated glass, resin laminated glass or film-bearing glass) is used as the substrate, it is preferred that a total thickness of a resin material constituting the laminate be 1 mm or more but 5 mm or less. In the case of a laminated glass, for example, the thickness of the intermediate film made of a resin is preferably adjusted to lie within the above range. In the case of a resin laminated glass, a total thickness of the resin plate and the intermediate film made of a resin is preferably adjusted to lie within the above range. In the case of a film-bearing glass, the thickness of the resin film is desired to be in the above range. When a film-bearing glass is used as a glass plate for a laminated glass, a total thickness of the intermediate film made of a resin and the resin film is preferably adjusted to lie within the above range.

When a resin plate is used as the substrate, the thickness of the resin plate is preferably 1 mm or more but 5 mm or less. When the thickness of the resin substrate, intermediate resin film, resin film, etc., in the laminate, or the thickness of the resin plate is 1 mm or more, the thermal conductivity may be considerably reduced as compared with that of a soda-lime-silica glass having the same thickness. On the other hand, when the thickness is 5 mm or less, the thickness of the substrate is advantageously prevented from becoming excessively large. The thickness is more preferably 2 mm or more but 4 mm or less.

When the automobile window material of the present invention is used as a windshield, a laminated glass having, for example, two glass plates laminated through an intermediate film is suitably used. In this case, it is preferred that the thickness of a portion of the intermediate film which is located on an upper side thereof when the window material is affixed to the automobile is larger by at least 0.1 mm than the thickness of the other portion of the intermediate film which is located on a lower side thereof when the window material is affixed to the automobile. With such a structure, the thermal conductivity of an upper portion of the laminated glass becomes lower than that of a lower portion thereof. Thus, in the winter season where the temperature of the atmosphere outside the automobile is lower than that inside thereof, the temperature of the upper portion of the interior surface of the laminated glass of the automobile can be made relatively high as compared to that of the lower portion thereof. From the above viewpoint, it is more preferred that the thickness of the upper portion of the intermediate film when affixed to the automobile is larger by from 0.3 to 1 mm than that of the lower portion thereof.

In the rain during the winter season, raindrops, ice and snow (hereinafter referred to as "raindrops, etc.) attached onto an exterior surface of a glass of an automobile cool the exterior surface. Therefore, the temperature of a region of the exterior surface of the window glass of the automobile from which the raindrops, etc. are not removed, is relatively low as compared to that of the other region from which the raindrops, etc. are removed with a wiper. Therefore, an interior surface region of the window glass corresponding to the region of the exterior surface from which the raindrops, etc., are not removed also has a temperature lower than the other region and tends to suffer from fogging. Such a region

from which the raindrops, etc., are not removed is generally an upper portion of the window glass facing to the passenger seat and an upper central portion of the windshield.

In the case of the above laminated glass of the present invention in which the thickness of the upper portion of the intermediate film is larger than that of the lower portion, it is possible to prevent the region from which the raindrops, etc., are not removed, from suffering from fogging.

Next, the automobile of the present invention will be described. The automobile of the present invention has a windshield formed of the automobile window material of the present invention and a front door window (front door glass or front door resin window) formed of the automobile window material of the present invention. For example, a laminated glass having an intermediate film with a thickness of from 1 to 5 mm is used as a substrate of the windshield. As a substrate of the front door window, the similar laminated glass, a laminate having a glass plate (on the exterior side of the automobile) and a polycarbonate resin plate (on the interior side of the automobile), a film-bearing glass or a resin plate is used. On the surface of the substrate which faces to the interior of the automobile, there is provided a coating film containing a surfactant capable of adsorbing and holding water vapor and a hydrophilic organic material. With such a construction, the front and side regions which are required to ensure at least minimum sight during driving, tend to hardly suffer from fogging. Therefore, during the driving of the automobile in the winter season, it is possible to save the fuel consumption by maintaining an air conditioner in an inside air recirculation mode or in a non-operation state.

The coating film 5 is formed from a coating solution for anti-fogging treatment which contains, as indispensable components, a surfactant capable of adsorbing and holding water vapor and a hydrophilic organic material. As the surfactant capable of adsorbing and holding water vapor, the component (D) of the coating solution for anti-fogging treatment of the present invention described in detail hereinafter is preferably used.

The amount of the surfactant (in terms of solid content) blended in the coating solution is preferably 25 parts by mass or less and more preferably from 5 to 20 parts by mass on the basis of 100 parts by mass of a total amount of the components other than the surfactant in the coating film.

The coating film 5 contains a hydrophilic organic material in addition to the surfactant. The hydrophilic organic material mainly serves to form a skeletal structure of the coating film. From the viewpoint of good compatibility with the surfactant, the hydrophilic organic material is preferably in the form of a compound, an oligomer or a polymer (the compound, oligomer and polymer will be hereinafter occasionally collectively referred to merely as a "material [a]") having two or more functional groups including - OH, -O-, =O, -SH, -S-, =S and $-NR^1{}_aR^2{}_b$ (wherein $R^1$ and $R^2$ each independently represent H or a $C_1$ to $C_5$ alkyl group and a and b are each 0, 1 or 2 with the proviso that $0 \leq (a+b) \leq 2$). The hydrophilic organic material is particularly preferably a material obtained by crosslinking the component (A) of the coating solution for anti-fogging treatment of the present invention which will be described in detail hereinafter. When such an organic material is used, it is possible to easily form a coating film containing the surfactant and the hydrophilic organic material.

The hydrophilic organic material may be a material obtained by crosslinking and curing a mixture of the material [a] with a component (hereinafter occasionally referred to as "component [b]") having two or more functional groups (such as isocyanate groups, isothiocyanate groups, epoxy groups, oxetane groups, silanol groups and carboxyl groups) capable of reacting with the functional group of the material [a], or may be a material obtained by crosslinking and curing a mixture of the material [a], the component [b] and a polyol compound, etc. When the above components form a skeletal structure of the coating film, the coating film has a crosslinked three-dimensional structure. The component [b] is particularly preferably the component (B) of the coating solution for anti-fogging treatment of the present invention which will be described in detail hereinafter. The polyol compound is particularly preferably the component (C) of the coating solution for anti-fogging treatment of the present invention which will be described in detail hereinafter.

The hydrophilic organic material may also be a material obtained by incorporating a silane compound into the above-described organic material or a material obtained by reacting a silane compound with the above-described organic material. Such a material constitutes a resin component containing a silicon atom to which at least one carbon atom and at least one oxygen atom are bonded. The silane compound is particularly preferably the component (E) of the coating solution for anti-fogging treatment of the present invention which will be described in detail hereinafter.

An additive such as oxide fine particles may also be incorporated into the hydrophilic organic material. The oxide fine particles are particularly preferably the component (F) of the coating solution for anti-fogging treatment of the present invention which will be described in detail hereinafter.

Next, the coating solution for anti-fogging treatment of the present invention will be described in detail. The coating solution for anti-fogging treatment of the present invention preferably includes (A) a specific resin component, (B) an organic isocyanate, (C) a polyol compound, (D) a surfactant, and (E) a partially hydrolyzed condensate of an organoalkoxysilane. The coating solution for anti-fogging treatment of the present invention is capable of forming an anti-fogging coating film having both high levels of anti-fogging property and wear resistance. An anti-fogging article of the present invention which has such an anti-fogging coating film is suited as, for example, a window for vehicles, an anti-fogging mirror, anti-fogging spectacles, sunglasses, goggles or a cover glass for monitors. The respective components of the coating solution will be described in detail below.

The component (A) of the anti-fogging coating solution of the present invention is preferably a homopolymer

having repeating units of the formula (1) shown below or a copolymer having repeating units of the formula (1) shown below and repeating units of at least one of the formulas (2) to (5) shown below. The copolymer is particularly preferably composed of 70 mol% or more of the repeating units represented by the formula (1) shown below and 30 mol% or less of the repeating units of at least one of the formulae (2) to (5) shown below. These copolymers may be used singly or in the form of a mixture of any two or more thereof. A mixture of the homopolymer and the copolymer may also be used. Further, a copolymer having three different kinds of repeating units may be also used.

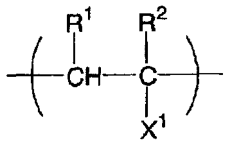

(1)

(wherein $R^1$ and $R^2$ each independently represent a hydrogen atom or a C1 to $C_5$ alkyl group and $X^1$ is an aliphatic group which has a hydroxyl group and which may be interrupted by an oxygen atom),

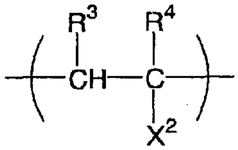

(2)

(wherein $R^3$ and $R^4$ each independently represent a hydrogen atom or a $C_1$ to $C_5$ alkyl group and $X^2$ represents an aliphatic group having an epoxy group),

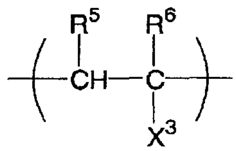

(3)

(wherein $R^5$ and $R^6$ each independently represent a hydrogen atom or a C1 to $C_5$ alkyl group and $X^3$ represents an alkoxycarbonyl group, an alkyl ether group, an alkynyl ether group, an alkenyl ether group or a tetrahydrofurfuryl group),

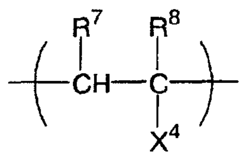

(4)

(wherein $R^7$ and $R^8$ each independently represent a hydrogen atom or a $C_1$ to $C_5$ alkyl group and $X^4$ represents a carboxyl group or an aliphatic group having a carboxyl group),

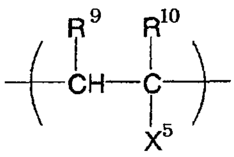

(5)

(wherein $R^9$ and $R^{10}$ each independently represent a hydrogen atom or a $C_1$ to $C_5$ alkyl group and $X^5$ represents an amide group, an amino group or an aliphatic group having an amide group or an amino group).

In the above formula (1), $R^1$ and $R^2$ each independently represent a hydrogen atom or a $C_1$ to $C_5$ alkyl group and $X^1$ is an aliphatic group which has a hydroxyl group and which may be interrupted by an oxygen atom. The term "interrupted by an oxygen atom" is intended to mean that an ester bond or an ether bond may be contained in the aliphatic chain.

The repeating unit represented by the above formula (1) is derived from a compound represented by the following formula (1'):

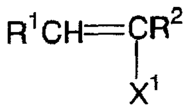

(1')

(wherein $R^1$, $R^2$ and $X^1$ are the same as defined above in connection with the formula (1)).

Examples of such a compound include 2-hydroxyethyl (meth)acrylate, 2-hydroxypropyl (meth)acrylate, 1,4-butylene glycol mono(meth)acrylate, glycerol mono(meth)acrylate, hydroxyallyl (meth)acrylate, polyethylene glycol mono(meth) acrylate, polypropylene glycol mono(meth)acrylate, 2-hydroxyethyl vinyl ether, diethylene glycol monovinyl ether and 4-hydroxybutyl vinyl ether.

In the above formula (2), $R^3$ and $R^4$ are each independently a hydrogen atom or a $C_1$ to $C_5$ alkyl group and $X^2$ is an aliphatic group having an epoxy group.

The repeating unit represented by the above formula (2) is derived from a compound represented by the following formula (2'):

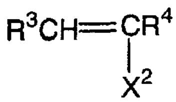

(2')

(wherein $R^3$, $R^4$ and $X^2$ are the same as defined above in connection with the formula (2)).

Examples of such a compound include glycidyl (meth)acrylate, β-glycidoxyethyl (meth)acrylate, 3,4-epoxybutyl (meth) acrylate, 4,5-epoxypentyl (meth)acrylate and glycidyl crotonate.

In the above formula (3), $R^5$ and $R^6$ are each independently a hydrogen atom or a $C_1$ to $C_5$ alkyl group and $X^3$ is an alkoxycarbonyl group, an alkyl ether group, an alkynyl ether group, an alkenyl ether group or a tetrahydrofurfuryl group.

The repeating unit represented by the above formula (3) is derived from a compound represented by the following formula (3'):

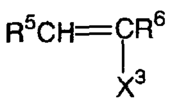

(3')

(wherein $R^5$, $R^6$ and $X^3$ are the same as defined in connection with the above formula (3).

Examples of such a compound include methyl (meth)acrylate, ethyl (meth)acrylate, tetrahydrofurfuryl (meth)acrylate,

methyl vinyl ether and ethyl vinyl ether.

In the above formula (4), $R^7$ and $R^8$ are each independently a hydrogen atom or a $C_1$ to $C_5$ alkyl group and $X^4$ is a carboxyl group or an aliphatic group having a carboxyl group.

The repeating unit represented by the above formula (4) is derived from a compound represented by the following formula (4'):

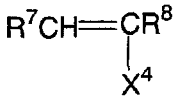

(4')

(wherein $R^7$, $R^8$ and $X^4$ are the same as defined above in connection with the formula (4)).

Examples of such a compound include (meth)acrylic acid, itaconic acid and crotonic acid.

In the above formula (5), $R^9$ and $R^{10}$ are each independently a hydrogen atom or a $C_1$ to $C_5$ alkyl group and $X^5$ is an aliphatic group having an amide group or an amino group. The hydrogen atom bonded to the nitrogen atom of the amido group or amino group may be substituted by a $C_1$ to $C_5$ alkyl group, a hydroxyalkyl group or an alkoxyalkyl group.

The repeating unit represented by the above formula (5) is derived from a compound represented by the following formula (5'):

[Chemical Formula 10]

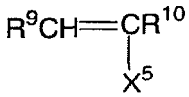

(5')

(wherein $R^9$, $R^{10}$ and $X^5$ are the same as defined above in connection with the formula (5)).

Examples of such a compound include aminomethyl (meth)acrylate, (meth)acrylamide, crotonamide, N-hydroxymethyl (meth)acrylamide, N-(2-hydroxyethyl) (meth)acrylamide, N,N-dihydroxymethyl (meth)acrylamide, N,N-dihydroxyethyl (meth)acrylamide, hydroxymethylaminomethyl (meth)acrylate, 2-hydroxyethylaminomethyl (meth)acrylate, 2-(2-hydroxyethylamino)ethyl (meth)acrylate, N,N-di(2-hydroxymethyl)aminomethyl (meth)acrylate, N,N-di(2-hydoxyethyl)aminomethyl (meth)acrylate, N-methyl (meth)acrylamide, N-ethyl (meth)acrylamide, N-propyl (meth)acrylamide, N-butyl (meth)acrylamide, N-tert-butyl (meth)acrylamide, N,N-dimethyl (meth)acrylamide, N,N-dipropyl (meth)acrylamide, N,N-dibutyl (meth)acrylamide, N-butoxymethyl (meth)acrylamide, N-iso-butoxymethyl (meth)acrylamide, 2-(N-methylamino) ethyl (meth)acrylate, 2-(ethylamino)ethyl (meth)acrylate, 2-(N,N-dimethylamino)ethyl (meth)acrylate, 2-(N,N-diethylaminoethyl) (meth)acrylate, 2-(N,N-dibutylamino)ethyl (meth)acrylate, 3-(N,N-dibutylamino)propyl (meth)acrylate, 2-(N,N-dibutylamino)propyl (meth)acrylate and N-methylol acrylamide.

When the resin component (A) contains the above copolymer, the copolymer includes the repeating units represented by the above formula (1) in an amount of from 70 to 100 mol% and more preferably from 80 to 95 mol%.

The above homopolymer or copolymer preferably has a weight-average molecular weight (Mw) (calculated in terms of polystyrene) as measured by gel permeation chromatography (GPC) of more than 1,000 but not more than 500,000, more preferably from 1,200 to 100,000 and still more preferably from 1,500 to 20,000.

The component (B) of the coating solution for anti-fogging treatment of the present invention is an organic isocyanate. The organic isocyanate, which serves as a curing agent, reacts with a hydroxyl group etc., of the component (A) and the component (C) which will be described in detail hereinafter, to form a urethane crosslinking structure.

The organic isocyanate is preferably a blocked isocyanate which is stabilized in reactivity under heating condition by blocking free isocyanate groups of a compound having a biuret structure, an adduct structure or an isocyanurate structure of diisocyanate, such as hexamethylene diisocyanate, with a blocking agent such as methanol, β-diketone, oxime or ε-caprolactam. Such blocked isocyanates may be commercially available under tradenames of, for example, "SUMIDULE BL3175", "DESMODULE BL3475", "DESMODULE BL3370", "DESMODULE 3272", "DESMODULE VPLS2253" and "DESMODULE TPLS2134" of Sumika Bayer Urethane Co., Ltd.; and "DURANATE 17B-60PX", "DURANATE TPA-B80X", "DURANATE MF-K60X" and "DURANATE MF-B60X" of Asahi Kasei Corp.

In addition to the above isocyanates, there may also be used diisophoron diisocyanate, diphenylmethane diisocyanate, bis(methylcyclohexyl) diisocyanate and toluene diisocyanate.

The content of the component (B) in the coating solution is preferably adjusted such that a total mole number

of the functional groups (isocyanate groups) of the component (B) is from 40 to 90 based on 100 of a total mole number of the hydroxyl groups contained in the component (A) and the component (C) which will be described hereinafter. When the total mole number of the functional groups of the component (B) is 40 or more, the resulting coating film has a sufficient degree of hardness. When the total mole number is 90 or less, the surface of the resulting coating film has a suitable crosslinking density so that the surfactant is not prevented from migrating to the surface thereof and, therefore, occurrence of fogging thereon can be inhibited. From this viewpoint, a total mole number of the functional groups of the component (B) is more preferably in the range of from 50 to 80.

The component (C) of the coating solution for anti-fogging treatment of the present invention is a polyol compound having a molecular weight of 1,000 or less (hereinafter referred to merely as a "polyol compound"). The polyol compound (C) preferably contains 3 or more hydroxyl groups in a molecule thereof. The number of hydroxyl groups contained in the polyol compound (C) is more preferably from 3 to 6 and still more preferably 3 or 4.

Examples of such a polyol include polyester polyols, polyether polyols, acrylic polyols, short chain polyols, polycarbonate polyols and polycaprolactone polyols.

As the polyester polyol, there may be used, for example, a compound represented by the following formula (6):

$$R^{11}-\left(R^{12}{}_{n1}-OH\right)_{m1} \qquad (6)$$

(wherein m1 is an integer of 2 to 9; $R^{11}$ is an organic group having a valence of m1; $R^{12}$ is a divalent organic group containing an ester bond; and n1's in the number of m1 are each independently an integer of 1 to 5).

In the above formula (6), m1 is preferably an integer of from 3 to 6, more preferably 3 or 4 and still more preferably 3, and n1 is preferably 1. Examples of suitable $R^{11}$ include a remaining group obtained after removing three hydroxyl groups from a trihydric alcohol and a remaining group obtained after removing four hydroxyl groups from a tetrahydric alcohol. Examples of the trihydric alcohol include glycerol, trimethylolpropane, 1,2,3-butanetriol and 1,2,4-butanetriol. Examples of the tetrahydric alcohol include pentaerythritol and ditrimethylolpropane.

Examples of suitable $R^{12}$ include divalent groups represented by the following formulae:

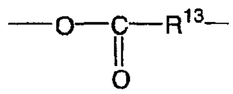

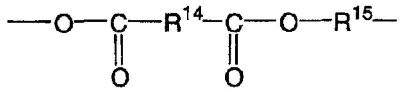

(wherein $R^{13}$ and $R^{14}$ each represent an alkylene group, a phenylene group or a divalent group of combined alkylene and phenylene groups; and $R^{15}$ represents an alkylene group).

Examples of the preferred alkylene group represented by $R^{13}$, $R^{14}$ and $R^{15}$ of the above formulae include a trimethylene group, a tetramethylene group, a pentamethylene group and a hexamethylene group. A part or all of the hydrogen atoms contained in these alkylene groups may be substituted with a $C_1$ to $C_4$ alkyl group or groups. Among these alkylene groups, a tetramethylene group, a pentamethylene group and a 3-methylpentamethylene group are preferred. Examples of the preferred phenylene group represented by $R^{13}$ and $R^{14}$ include a p-phenylene group, an o-phenylene group and a m-phenylene group. Apart or all of the hydrogen atoms contained in these phenylene groups may be substituted with a $C_1$ to $C_4$ alkyl group or groups. Among these phenylene groups, a p-phenylene group is preferred.

The above polyester polyols may be commercially available under the names of adipic acid polyol, terephthalic acid polyol, isophthalic acid polyol, phthalic acid polyol, etc. Specific examples of such commercially available products include "KURARAY POLYOL F-510" (available from Kuraray Co., Ltd.), "DESMOPHEN 651" (available from Sumika Bayer Urethane Co., Ltd.) and "ADEKA NEW ACE" (manufactured by Adeka Corp.).

As the polyether polyol, there may be used, for example, a compound represented by the following formula (7):

$R^{16}\{R^{17}{}_{n2}\text{-}OH)_{m2}$ (7)

(wherein m2 is an integer of 2 to 9; $R^{16}$ is an organic group having a valence of m2; $R^{17}$ is a divalent organic group containing an ether bond; and n2's in the number of m2 are each independently an integer of 1 to 5).

In the above formula (7), m2 is preferably an integer of 3 to 6, more preferably 3 or 4 and still more preferably 3, and n2 is preferably 1. Examples of suitable $R^{16}$ are the same as those exemplified for $R^{11}$ of the formula (6). Examples of suitable $R^{17}$ include divalent groups represented by the following formula:

$-O-R^{18}-$

(wherein $R^{18}$ represents an alkylene group).

Examples of suitable $R^{18}$ include an ethylene group, a propylene group and a trimethylene group. Examples of commercially available products of the polyether polyol include "EXCENOL 430", "EXCENOL 385SO", "EXCENOL 450ED", "EXCENOL 500ED", "EXCENOL 750ED" (all available from Asahi Glass Co., Ltd.), "ADEKA POLYETHER" (available from Adeka Corp.) and "ACTCOL" (available from Mitsui Chemicals Polyurethanes, Inc.).

The acrylic polyol may be obtained in the form of a polymer of a hydroxyl group-containing (meth)acrylate compound or a copolymer of the hydroxyl group-containing (meth)acrylate compound with other unsaturated compounds. Examples of the hydroxyl group-containing (meth)acrylate compound include the (meth)acrylate compounds exemplified above as the compounds of the above formula (1'). Examples of the "other unsaturated compounds" include methyl (meth)acrylate, ethyl (meth)acrylate, styrene, 1,3-butadiene and isoprene.

Examples of the short chain polyol include glycerol, trimethylolpropane, 1,2,3-butanetriol, 1,2,4-butanetriol and pentaerythritol.

The polycarbonate polyol may be obtained by the ordinary method in which a known polyhydric alcohol is reacted with phosgene, a chloroformic acid ester, a dialkyl carbonate, a diaryl carbonate or an alkylene carbonate, and has two or more and preferably three or more hydroxyl groups on average in a molecule thereof. Examples of the commercial products of the polycarbonate polyol include "NIPPOLAN" (available from Nippon Polyurethane Industry Co., Ltd.), and "ETERNACOLL (registered trademark) UH", "ETERNACOLL UHC", "ETERNACOLL UC" and "ETERNACOLL UM" (all available from Ube Industries Ltd.).

The polycaprolactone polyol may be produced by ring-open addition polymerization of ε-caprolactone using a compound having two or more hydroxyl groups as an initiator. Specific examples of the polycaprolactone polyol include addition products of ε-caprolactone with an ordinarily employed polyhydric alcohol such as ethylene glycol, diethylene glycol, propylene glycol, dipropylene glycol, neopentyl glycol, 1,4-butanediol, 1,6-hexanediol, an ethyleneoxide- or propyleneoxide-adduct of bisphenol A, glycerol, trimethylolpropane and trimethylolmethane pentaerythritol. Examples of the commercial product of the polycaprolactone polyol include "PLAXEL 303", "PLAXEL 305" and "PLAXEL 308" (all available from Daicel Chemical Industries Ltd.), "CAPA4101", "CAPA3031", "CAPA3041" and "CAPA3050" (all available from Solvay Chemicals, Inc.).

Among the above polyol compounds (C) incorporated in the coating solution of the present invention, the polyester polyol, polyether polyol and polycaprolactone polyol are preferred.

The molecular weight of the polyol compound (C) incorporated in the coating solution of the present invention is 1,000 or less, preferably from 100 to 1,000 and more preferably from 150 to 800. The term "molecular weight" as used herein is intended to mean a number-average molecular weight when the polyol compound is a polymer.

The above polyol compounds may be used singly or in combination of any two or more thereof.

The amount of the polyol compound (C) blended in the coating solution is preferably from 15 to 60% by mass on the basis of a total amount of the component (A) and the component (C). When the amount of the polyol compound (C) blended is within the above range, migration of the surfactant in the coating film is restricted in a predetermined range so that good anti-fogging performance can be maintained.

The component (D) of the coating solution for anti-fogging treatment of the present invention is a surfactant having an HLB (Hydrophile-Lipophile Balance) value which is an index of balance between hydrophilicity and hydrophobicity, of 10 or more. The surfactant, which has an active hydrogen group such as a hydroxyl group, a mercapto group or an amino group, is present at least in part on a surface of the anti-fogging article of the present invention and serves as a component for imparting a hydrophilicity to the surface so that the surface can exhibit a good anti-fogging property.

As the surfactant, there may be used a cationic surfactant, an anionic surfactant, an amphoteric surfactant or a nonionic surfactant. Particularly preferred surfactant is an nonionic surfactant such as a polyoxyethylene alkyl ether-type surfactant, a polyoxyethylene alkyl amine-type surfactant and a polyoxyethylene alkyl amide-type surfactant which will be described in detail hereinafter.

Examples of the anionic surfactant include castor oil monosulfate, castor oil monophosphate, sorbitan fatty acid ester sulfate, sorbitan fatty acid ester phosphate, sorbitol fatty acid ester sulfate, sorbitol fatty acid ester phosphate, sucrose fatty acid ester sulfate, sucrose fatty acid ester phosphate, polyoxyalkylene castor oil ether monosulfate, polyoxyalkylene castor oil ether monophosphate, polyoxyalkylene sorbitan fatty acid ester sulfate, polyoxyalkylene sorbitan fatty acid ester phosphate, polyoxyalkylene glycerol ether monosulfate and polyoxyalkylene glycerol ether monophosphate.

Examples of the cationic surfactant include dialkanolamine salts, trialkanolamine salts, polyoxyalkylene alkylamine ether salts, fatty acid trialkanolamine ester salts, polyoxyalkylene dialkanolamine ether salts, polyoxyalkylene trialkanolamine ether salts, di(polyoxyalkylene) alkylbenzylalkyl ammonium salts, alkylcarbamoylmethyl di(polyoxyalkylene) ammonium salts, polyoxyalkylene alkyl ammonium salts, polyoxyalkylene dialkyl ammonium salts and ricinoleamide propylethyl dimonium ethosulfate.

Examples of the amphoteric surfactant include N,N-di(β-hydroxyalkyl)-N-hydroxyethyl-N-carboxyalkyl ammonium betaine, N-β-hydroxyalkyl-N,N-dipolyoxyalkylene-N-carboxyalkyl ammonium betaine, N-alkyl-N,N-di(polyoxyalkylene)amine dicarboxylic acid monoesters, N-(polyoxypropylene)-N',N'-di(polyoxyethylene)-aminoalkyl-N-alkyl-N-sulfoalkyl ammonium betaine, N,N-di (polyoxyethylene) -N-alkyl-N-sulfoalkyl ammonium betaine, N-(β-hydroxyalkylaminoethyl)-N-(β-hydroxyalkyl)- aminoethylcarboxylic acid, N,N'-bis(2-hydroxyalkyl)-N,N'-bis(carboxyethyl)-ethylenediamine salts and N-(β-hydroxyalkyl)-N',N'-di(polyoxyethylene)-N-carboxyethyl ethylenediamine salts.

Examples of the nonionic surfactant include polyoxyethylene-polyoxypropylene block polymers, sorbitol fatty acid esters, sorbitan fatty acid esters, sucrose fatty acid esters, polyoxyalkylene sorbitan fatty acid esters, fatty acid monoglycerides, polyoxyalkylene fatty acid monoglycerides, polyglycerol fatty acid esters, polyoxyalkylene castor oil ethers, polyoxyalkylene alkylamines and polyoxyalkylene alkylamides.

The above surfactants may be used singly or in the form of a mixture of any two or more thereof.

The amount of the surfactant (D) blended in the coating solution is preferably 25% by mass or less and more preferably from 5 to 20% by mass on the basis of a total amount of the component (A), the component (B), the component (C) and the component (D).

The component (E) of the coating solution for anti-fogging treatment of the present invention is a partially hydrolyzed condensate of an organoalkoxysilane. As the suitable organoalkoxysilane, there may be used a compound represented by the following formula (8):

$$R^{19}{}_xSi(OR^{20})_{4-x} \quad (8)$$

(wherein $R^{19}$ represents an organic group having a $C_1$ to $C_8$ epoxy group; $R^{20}$ represents a $C_1$ to $C_5$ alkyl group or a $C_2$ to $C_4$ acyl group; and x is 1).

Examples of the organic group having a $C_1$ to $C_8$ epoxy group represented by $R^{19}$ in the formula (8) include a γ-glycidoxypropyl group, a β-glycidoxypropyl group and a 3,4-epoxycyclohexyl group. Examples of the $C_1$ to $C_5$ alkyl group and the $C_2$ to $C_4$ acyl group represented by $R^{20}$ include alkyl groups such as a methyl group, an ethyl group, a propyl group, a butyl group and a pentyl group; and acyl groups such as an acetyl group, a propionyl group and a butyryl group. The carbon numbers of $R^{19}$ and $R^{20}$ groups are preferably within the above range, because a suitable hydrolysis rate may be obtained.

Specific examples of the epoxy group-containing organic group include γ-glycidoxypropyl trimethoxysilane, β-glycidoxypropyl trimethoxysilane, γ-glycidoxypropyl triethoxysilane, β-glycidoxypropyl triethoxysilane, γ-glycidoxypropylmethyl dimethoxysilane, γ-glycidoxypropylmethyl diethoxysilane and β-(3,4-epoxycyclohexyl)ethyl trimethoxysilane.

The component (E) used in the present invention may be obtained, for example, by partial hydrolytic condensation of the above-described epoxysilane in the absence of a catalyst or in the presence of an organic acid or inorganic acid catalyst. Examples of the organic acid include formic acid, acetic acid and oxalic acid. Examples of the inorganic acid include hydrochloric acid, nitric acid, sulfuric acid and phosphoric acid. Among these acids, volatile inorganic acids such as nitric acid and hydrochloric acid are preferred.

The molecular weight of the partially hydrolyzed condensate of the organoalkoxysilane may be controlled by adjusting the amount of water added upon the hydrolysis. The amount of water added is preferably from 0.2 to 10 mol and more preferably from 0.5 to 6 mol per 1 mol of the alkoxy group contained in the organoalkoxysilane as the raw material. When the amount of water used is within the above range, a balance between the alkoxy groups and hydroxyl groups is well maintained so that a coating film forming composition having good storage stability, curing property and viscosity may be obtained.

The content of the partially hydrolyzed condensate of the organoalkoxysilane (E) in the coating solution is preferably from 0.5 to 10 parts by mass, in terms of non-volatile matter content, on the basis of 100 parts by mass of a total amount of the component (A), the component (B), the component (C) and the component (D). When the content of the component (E) is 0.5 part by weight or more, the obtained anti-fogging coating film can exhibit a sufficient wear resistance. When the content of the component (E) is 10 parts by mass or less, the obtained anti-fogging coating film can maintain a good anti-fogging property.

The coating solution for anti-fogging treatment of the present invention may be blended with oxide fine particles as a component (F). The oxide fine particles are fine particles of an oxide of silicon or a metal. As the metal, there may be used, for example, at least one metal element selected from Al, Sn, Sb, Ta, Ce, La, Fe, Zn, W, Zr, In and Ti may be used. Specific examples of the oxides include $SiO_2$, $Al_2O_3$, $SnO_2$, $Sb_2O_5$, $Ta_2O_5$, $CeO_2$, $La_2O_3$, $Fe_2O_3$, ZnO, $WO_3$, $ZrO_2$, $In_2O_3$ and $TiO_2$. These oxide particles may be used singly or in the form of a mixture of any two or more thereof. The oxide particles preferably have a particle diameter of from 1 to 100 nm and more preferably from 5 to 50 nm.

Among the above oxide particles, $SiO_2$ particles are preferred. The use of colloidal silica is more preferred.

The colloidal silica is available on the market. Examples of the commercially available colloidal silica include chain-like or branched silica such as the "IPA-ST" (particle diameter: 10 to 20 nm, solid content: 30%, isopropanol solvent), "Methanol Silica Sol" (particle diameter: 10 to 20 nm, solid content: 30%, methanol solvent), "NPC-ST-30" (particle diameter: 10 to 20 nm, solid content: 30%, ethylene glycol mono-n-propyl ether solvent), "EG-ST" (particle diameter: 10 to 20 nm, solid content: 30%, ethylene glycol solvent), "SNOWTEX O-40" (particle diameter: 20 to 30 nm, solid content: 40%, water dispersion), "ST-OUP" (chain-like silica, particle diameter: 10 to 20 nm, solid content: 15%, water solvent) and "IPA-ST-UP" (chain-like silica, particle diameter: 10 to 20 nm, solid content: 15%, isopropanol solvent) all available from Nissan Chemical Industries, Ltd.

These oxide particles (F) may be used after their surfaces have been modified with a hydrolyzed product of an organic silane compound to improve a dispersibility thereof into a solvent.

Surface modification with the hydrolyzed product of the organic silane compound may be carried out by contacting the oxide particles with the organic silane compound which is used in an amount of preferably 40% by mass or less and more preferably from 1 to 40% by mass based on the amount of the oxide particles, followed by hydrolysis of the organic silane compound. Alternatively, the surface modification may be carried out by first hydrolyzing the organic silane compound in an amount corresponding to the above proportion, and then contacting the resulting hydrolyzed product with the oxide particles. The contact between the oxide particles and the organic silane compound or the hydrolyzed product thereof is preferably performed in a suitable dispersing medium.

Examples of the organic silane compound include monofunctional silanes represented by the formula: $R_3SiX$ (where R represents an alkyl group, a phenyl group, a vinyl group or an organic group having a (meth)acryloxy group, a mercapto group, an amino group or an epoxy group, and X represents a hydrolyzable group); bifunctional silanes represented by the formula: $R_2SiX_2$ (where R and X are the same as defined above); trifunctional silanes represented by the formula: $RSiX_3$ (where R and X are the same as defined above); and tetrafunctional silanes represented by the formula: $SiX_4$ (where X is the same as defined above).

In the above organic silane compounds, the organic group is preferably a $C_1$ to $C_4$ alkyl group. The hydrolysable group is preferably a halogen atom or a $C_1$ to $C_4$ alkoxy group.

Specific examples of the organic silane compound include monofunctional silanes such as trimethylmethoxysilane, triethylmethoxysilane, trimethylethoxysilane, triethylethoxysilane, triphenylmethoxysilane, diphenylmethylmethoxysilane, phenyldimethylmethoxysilane, phenyldimethylethoxysilane, vinyldimethylmethoxysilane, vinyldimethylethoxysilane, γ-acryloxypropyldimethylmethoxysilane, γ-methacryloxypropyl-dimethylmethoxysilane, γ -mercaptopropyldimethylmethoxysilane, γ-mercaptopropyldimethylethoxysilane, N-β-(aminoethyl) γ-aminopropyldimethylmethoxysilane, γ-aminopropyldimethylmethoxysilane, γ-aminopropyldimethylethoxysilane, γ-glycidoxypropyldimethylmethoxysilane, γ-glycidoxypropyl-dimethoxyethoxysilane and β-(3,4-epoxycyclohexyl)-ethyldimethylmethoxysilane; bifunctional silanes such as dimethyldimethoxysilane, diethyldimethoxysilane, dimethyldiethoxysilane, diethyldiethoxysilane, diphenyldimethoxysilane, phenylmethyldimethoxysilane, phenylmethyldiethoxysilane, vinylmethyldimethoxysilane, vinylmethyldiethoxysilane, γ-acryloxypropylmethyldimethoxysilane, γ-methacryloxypropyldimethyldimethoxysilane, γ-mercaptopropylmethyldimethoxysilane, γ-mercaptopropylmethyldiethoxysilane, N-β-(aminoethyl)- γ-aminopropylmethyldimethoxysilane, γ-aminopropylmethyldimethoxysilane, γ-aminopropylmethyldiethoxysilane, γ-glycidoxypropylmethyldimethoxysilane, γ-glycidoxypropylmethoxyldiethoxysilane and β-(3,4-epoxycyclohexyl)ethylmethyldimethoxysilane;

trifunctional silanes such as methyltrimethoxysilane, ethyltrimethoxysilane, methyltriethoxysilane, ethyltriethoxysilane, phenyltimethoxysilane, phenyltriethoxysilane, vinyltrimethoxysilane, vinyltriethoxysilane, vinyl(β-methoxyethoxy)silane, γ-acryloxypropyltrimethoxysilane, γ-methacryloxypropyltrimethoxysilane, γ-mercaptopropyltrimethoxysilane, γ-mercaptopropyltriethoxysilane, N-β-(aminoethyl) γ-aminopropyltrimethoxysilane, γ-aminopropyltrimethoxysilane, γ-aminopropyltriethoxysilane, γ-glycidoxypropyltrimethoxysilane, β-glycidoxypropyltrimethoxysilane, γ-glycidoxypropyltriethoxysilane, β-glycidoxypropyltriethoxysilane and β-(3,4-epoxycyclohexyl)ethyltrimethoxysilane; and tetrafunctional silanes such as tetraethyl orthosilicate and tetramethyl orthosilicate.

Examples of the dispersing medium used in the suface modification of the oxide particles include saturated aliphatic alcohols such as methanol, ethanol, isopropyl alcohol, n-butanol and 2-butanol; cellosolves such as methyl cellosolve, ethyl cellosolve, propyl cellosolve and butyl cellosolve; propylene glycol derivatives such as propylene glycol monomethyl ether, propylene glycol monoethyl ether and propylene glycol monomethyl acetate; esters such as methyl acetate, ethyl acetate and butyl acetate; ethers such as diethyl ether and methyl isobutyl ether; ketones such as acetone and methyl isobutyl ketone; aromatic hydrocarbons such as xylene and toluene; and ethylene glycol, tetrahydrofuran, N,N-dimethylformamide and dichloroethane.

The amount of the oxide particles (F) blended in the coating solution is preferably 25% by mass or less and more preferably 10% by mass or less on the basis of a total amount of the component (A), the component (B), the component (C) and the component (F).

Next, the anti-fogging article of the present invention will be described. The term "anti-fogging article" as used herein is intended to involve the above-described automobile window material. Thus, the following description of the anti-fogging article also applies to the automobile window material.

The anti-fogging article of the present invention may be obtained by applying the above-described coating solution for anti-fogging treatment onto a substrate such as a glass plate, followed by drying and calcining the resulting coating film. More specifically, the anti-fogging article has an anti-fogging coating film obtained by crosslinking a coating film including (A) a resin component which is composed of a homopolymer containing repeating units represented by the above formula (1) or a copolymer containing 70 mol% or more of the repeating units represented by the above formula (1) and 30 mol% or less of repeating units represented by at least one of the above formulae (2) to (5); (B) an organic isocyanate; (C) a polyol compound having a molecular weight of 1,000 or less; (D) a surfactant having an HLB value of 10 or more; and (E) a partially hydrolyzed condensate of an organoalkoxysilane.

In the anti-fogging article of the present invention, the anti-fogging coating film formed on a surface of the substrate contains a resin component containing a silicon atom to which at least one carbon atom and at least one oxygen atom are bonded, and a surfactant having an HLB value of 10 or more. At least a part of the surfactant is present on a surface of the anti-fogging coating film. The surfactant which is present on the surface of the coating film may be bonded with water which is generated when the air reaches a saturated state. As a consequence, the generated water is spread over the surface of the coating film so that occurrence of fogging thereon may be prevented.

The anti-fogging article of the present invention has the anti-fogging coating film containing a resin component containing a silicon atom to which at least one carbon atom and at least one oxygen atom are bonded. The resin component is derived from the component (E) which is a partially hydrolyzed condensate of an organoalkoxysilane. Owing to the inclusion of the resin component, the anti-fogging coating film has an improved hardness.

The anti-fogging article of the present invention preferably has a difference in haze value due to abrasion of 6% or less, which is calculated by subtracting a haze value thereof before an abrasion test from a haze value thereof after the abrasion test, wherein the abrasion test is performed with respect to a surface of the coating film in accordance with JIS R3212, paragraph 3.7 at a load of 2.45 N and a revolution number of 500. The anti-fogging article, in which the difference (increase) in haze value due to abrasion is 6% or less, may be suitably used as an article which requires a high wear resistance, such as a windshield glass for automobiles or airplanes.

The anti-fogging article preferably shows a residual percentage of the surfactant in the anti-fogging coating film of from 20 to 75% when immersed in water at 40°C for 1 h. When the residual percentage is within the above range, dissolution of the surfactant in water is controlled within a given range so that the desired anti-fogging performance can be maintained for a long period of time.

From the above viewpoint, the residual percentage of the surfactant in the anti-fogging coating film as measured under the above test conditions is more preferably in the range of from 25 to 70%. The residual percentage of the surfactant in the anti-fogging coating film may be measured by the following method.

<u>Measurement of residual percentage of surfactant:</u>

An antifogging article is cut into a square shape with a side length of 100 mm and the cut sample is allowed to stand in an environment having a temperature of 23°C and a humidity of 20%RH for 1 day. Then, the sample is weighed with a precision of unit of 0.01 mg in an environment having a temperature of 23°C and a humidity of 20%RH (mass before immersion). In a thermostatic vessel, 10 L of ion-exchanged water is placed and maintained at 40°C. The above cut antifogging article sample is immersed in the water for 1 h and then taken out of the vessel. The antifogging article sample is allowed to stand in an environment having a temperature of 23°C and a humidity of 20%RH for 1 day and thereafter weighed to determine a mass thereof after 1-hour immersion (mass after 1-hour immersion). Meanwhile, measurement of the mass after 1-hour immersion is made with a precision of unit of 0.01 mg similarly to the above measurement of the mass before immersion. A different value obtained by subtracting the mass after 1-hour immersion from the mass before immersion is termed as a reducing amount (D1) of the mass between before and after the 1-hour immersion.

Next, in the same conditions as used in the above 1-hour immersion test, a similar anti-fogging article sample is immersed for 96 h. The anti-fogging article sample is taken out of the vessel, allowed to stand in an environment having a temperature of 23°C and a humidity of 20%RH for 1 day, and thereafter weighed to determine a mass thereof after the 96 hour-immersion (mass after 96 hour-immersion). A difference value obtained by subtracting the mass after 96-hour immersion from the mass before immersion is termed as a reducing amount (D96) of the mass between before and after the 96-hour immersion.

The residual percentage of the surfactant in the coating film when the anti-fogging article is immersed in water for 1 h is calculated according to the following equation:

$$\text{Residual percentage} = \{1 - (D1/D96)\} \times 100(\%)$$

In the above measurement, it is required to satisfy the relationship represented by the following formula:

$$D72/D96 \geq 0.99$$

wherein D72 is a reducing amount of the mass between before and after 72-hour immersion test performed in the same manner as that in the 96-hour immersion test except for using an immersion time of 72 h. If the above relationship is not satisfied, the calculated value of the residual percentage is considered to be improper.
The reducing amount D1 indicates the amount of the surfactant dissolved in water during the 1-hour immersion of the anti-fogging article in water, whereas the reducing amount D96 indicates the amount of the surfactant dissolved in water during the 96-hour immersion of the anti-fogging article in water. It is assumed that substantially a whole amount of the surfactant is dissolved in water after 96 h. This assumption is considered to be valid because there is substantially no reduction in mass between after 72 h and after 96 h.

## EXAMPLES

### Example 1

Preparation of hydrophilic organic component-containing solution:

To 320 parts by mass of methoxypropanol as a solvent were added 94 parts by mass of 2-hydroxymethacrylate as a monomer, 6 parts by mass of 2-(N,N-dimethylamino)ethyl methacrylate as a monomer and 0.4 part by mass of azobisisobutylnitrile as a polymerization initiator. The mixture was stirred at 90°C for 4 h in a nitrogen atmosphere to obtain a solution of a copolymer having a molecular weight of about 10,000 and a non-volatile matter content of 24.5%. The obtained copolymer solution was diluted with methoxypropanol to adjust its non-volatile matter content to 20% to obtain an organic component-containing solution.

Preparation of solution for forming water-absorbing coating film:

The above organic component-containing solution in an amount of 44.5 parts by mass was mixed under stirring, with 23.2 parts by mass of a blocked isocyanate as an organic isocyanate, 3.9 parts by mass of a polyester polyol ("PLAXEL 303" available from Daicel Chemical Industries Ltd.) as a polyol compound, 4.5 parts by mass of polyoxyethylene oleamide as a surfactant and 23.9 parts by mass of methoxypropanol as a solvent, to obtain a solution for forming a water-absorbing coating film.

Preparation of primer solution:

A primer solution was obtained by mixing 1 part by mass of aminosilane ("KBM-903" available from Shin-Etsu Chemical Industries Co., Ltd.) with 100 parts by mass of isopropanol as a solvent under stirring.

Formation of water-absorbing coating film:

A soda-lime-silica glass with a thickness of 2 mm was cut and curved to obtain a windshield. The concave side surface was cleaned and the cleaned glass surface was manually applied with BEMCOT impregnated with the primer solution. The glass coated with the primer solution was placed in a hot wind circulating furnace at 100°C for 5 min and then allowed to stand for being cooled to room temperature to obtain a dried coating of the primer solution. Thereafter, the solution for forming a water-absorbing coating film was applied to a surface of the primer coating by a spray-coating method.
The coated glass was placed in a hot wind circulating furnace at 150°C for 20 min to dry the coating of the solution to form a water-absorbing coating film.

Preparation of laminated glass:

The soda-lime-silica glass on which the water-absorbing coating film was previously formed was bonded, through a 1.5 mm thick polyvinyl butyral intermediate film, to a 2 mm thick soda-lime-silica glass which was cut and curved into substantially the same shape as that of the former soda-lime-silica glass to obtain a laminated glass having the water-absorbing coating film. In this case, the two glasses were bonded to each other such that the water-absorbing

film was exposed on the exterior surface, namely the water-absorbing film-bearing soda-lime-silica glass was bonded to the other glass such that the non-coated surface of the water-absorbing film-bearing soda-lime-silica glass was in contact with the intermediate film.

Evaluation of the laminated glass having water-absorbing film:

The thus prepared laminated glass for a windshield is affixed to a determined position of an automobile. Then, the automobile was driven under each of the running conditions 1 to 4 shown in Table 1 while evaluating with naked eyes whether or not fogging of the windshield occurred. No fogging was observed on the surface of the automobile window glass of Example 1 in any of the running conditions shown in Table 1. However, it was confirmed that a front door glass of the automobile which was made of a 3.5 mm thick soda-lime-silica glass (strengthened glass) suffered from fogging soon after the start of the running.

TABLE 1

| Running Condition | Outside Air Temperature [°C] | Running Speed [km/h] | Car Inside Temperature [°C] | Car Inside Humidity [%RH] | Car Inside Dew Temperature (saturated absolute temperature) [°C] [kg/kgD.A.] | Car Inside Glass Surface Temperature (Car Inside Surface Absolute Temperature) [°C] (kg/kgD.A.) | Temperature Difference [°C] |
|---|---|---|---|---|---|---|---|
| Condition 1 | 0 | 100 | 23 | 32 | 5.4 (0.005566) | 4 (0.005031) | -1.4 (0.000535) |
| Condition 2 | 0 | 60 | 23 | 40 | 8.7 (0.006974) | 5 (0.005399) | -3.7 (0.001575) |
| Condition 3 | -3 | 60 | 24 | 32 | 6.3 (0.005916) | 2.8 (0.004619) | -3.5 (0.001297) |
| Condition 4 | -8 | 40 | 24 | 32 | 5.4 (0.005916) | 0.3 (0.003856) | -5.1 (0.00206) |

As is apparent from the above evaluation results, the water-absorbing coating film of the present invention was able to prevent the window glass surfaces from fogging during running of the automobile when maintained at an interior temperature of about 23°C in the winter season where the outside air temperature was from -8 to 0°C.

Next, the coating solution for anti-fogging treatment as well as the anti-fogging article having the anti-fogging coating film according to the present invention are described. The evaluation methods are as follows.

Evaluation method:

(1) Appearance (initial performance)

An appearance of the anti-fogging coating film-bearing glass (anti-fogging article) obtained in each of Examples and Comparative Examples was observed by naked eyes and evaluated according to the following ratings:

A: Glass is transparent and provides distortion-free transmitted images
B: Non-transparent portion or portions exist in a part or whole of the glass

(2) Resistance to fogging by exhalation (initial performance)

Exhaled air was blown onto the surface of the anti-fogging coating film of the anti-fogging coating film-bearing glass (anti-fogging article) obtained in each of Examples and Comparative Examples to visually examine whether or not fogging of the glass occurred immediately after blowing the exhaled air.

(3) Retention of anti-fogging property

As shown in FIG. 4, the anti-fogging coating film-bearing glass *3* (anti-fogging article) obtained in each of Examples and Comparative Examples was set in an anti-fogging performance evaluation device *1*. The atmosphere inside of a box *4* was maintained at 0°C, whereas the atmosphere inside of a box *2* was maintained at 23°C and 30%RH. The glass was allowed to stand in that condition for 100 hours. Then, the degree of fogging of the glass was observed with a video camera *5* to visually evaluate whether or not fogging of the glass occurred.

(4) Wear resistance

A surface of the coating film of the anti-fogging coating film-bearing glass (anti-fogging article) obtained in each of Examples and Comparative Examples was subjected to an abrasion test in accordance with JIS R3212, paragraph 3.7 at a load of 2.45 N and a revolution number of 500. An increase of a haze value caused by wear was calculated by subtracting a haze value before the abrasion test from a haze value after the abrasion test. In Table 5 shown below, "peel" indicates that the abrasion test resulted in peeling of the anti-fogging coating film.

(5) Residual percentage of surfactant

The anti-fogging coating film-bearing glass (anti-fogging article) obtained in each of Examples and Comparative Examples was measured for the residual percentage of the surfactant according to the method described above.

(6) Fastness

Using an abrasion tester (available from Shinto Scientific Co., Ltd.) to which a flannel was attached, the sample was subjected to an abrasion test for 3,000 times under a load of 4.90 N/4 $cm^2$ (dry cloth abrasion). Next, the same test was carried out using a flannel wet with water (wet cloth abrasion). The sample after subjected to the abrasion test was evaluated for appearance and resistance to fogging by exhalation according to the following ratings.

Appearance

A: No scratches occurred
B: Scratches occurred

Resistance to fogging by exhalation

A: No fogging occurred
B: Fogging occurred

(7) Chemical resistance

The sample was immersed in 0.1N sulfuric acid at 23°C for 2 h and then in a 0.1N sodium hydroxide aqueous solution at 23°C for 2 h. The sample was evaluated for appearance and resistance to fogging by exhalation according to the following ratings.

Appearance

A: Neither peeling of the film nor formation of cracks occurred before and after the test
B: Certain change occurred before and after the test

Resistance to fogging by exhalation

A: No fogging occurred
B: Fogging occurred

(8) Stability

The sample was allowed to stand in high temperature and high humidity conditions (80°C; 95%RH) and in low temperature conditions (-30°C) each for 500 h. Thereafter, the stability was evaluated by appearance and resistance to fogging by exhalation in the same manner as that in the above chemical resistance test.

Preparation Example A-1

Preparation of resin component (A):

Into 320 parts by mass of methoxypropanol (solvent) were added 94 parts by mass of 2-hydroxyethyl methacrylate (Monomer 1), 6 parts by mass of 2-(N,N-dimethylamino)ethyl methacrylate (Monomer 2) and 0.4 part by mass of azobisisobutylnitrile (AIBN). The mixture was stirred at 90°C for 4 h in a nitrogen atmosphere to subject these components to copolymerization. The obtained copolymer was a copolymer of 2-hydroxyethyl methacrylate with 2-(N,N-dimethylamino)ethyl methacrylate (hereinafter referred to merely as Copolymer 1) having a molecular weight of about 10,000. The copolymer was diluted with methoxypropanol to adjust the non-volatile matter content to 20%. The hydroxyl number of the resulting solution was found to be 84.

Preparation Examples A-2 to A-5

Preparation of resin components (A):

Resin components (A) (in the form of a polymer or a copolymer) shown in Table 1 were prepared in the same manner as in Preparation Example A-1 except for changing the contents of the Monomer 1 and Monomer 2 and the reaction time as shown in Table 2.
TABLE 2

| | Preparation Examples | | | | |
|---|---|---|---|---|---|
| | A-1 | A-2 | A-3 | A-4 | A-5 |
| Methoxypropanol (solvent) (part by mass) | 320 | 320 | 320 | 320 | 320 |
| 2-hydroxymethacrylate (Monomer 1) (part by mass) | 94 | 100 | 90 | 94 | 94 |
| 2-(N,N-dimethylamino)ethyl methacrylate (Monomer 2) (part by mass) | 6 | 0 | 10 | 6 | 6 |
| AIBN(part by mass) | 0.4 | 0.4 | 0.4 | 0.4 | 0.4 |
| Reaction temperature (°C) | 90 | 90 | 90 | 90 | 90 |
| Reaction time (h) | 4 | 4 | 4 | 2 | 8 |
| Resin component (A) | Copolymer 1 | Polymer 2 | Copolymer 3 4 5 | Copolymer | Copolymer |
| Weight-average molecular weight of resin component (A) | ca. 10,000 | ca. 10,000 | ca. 10,000 | ca. 1,500 | ca. 100,000 |
| Hydroxyl number of solution of resin component (A) | 84 | 86 | 82 | 84 | 84 |

Preparation Example B-1

<u>Preparation of anti-fogging solution</u>:

Into 231 parts by mass of methoxypropanol as a solvent were added 451 parts by mass of the solution of the resin component (A) (Copolymer 1, non-volatile matter content of 20% by mass) obtained in Preparation Example A-1. The mixture was stirred and then further added with 234 parts by mass of a blocked isocyanate ("SUMIDULE BL3175" available from Sumika Bayer Urethane Co., Ltd., non-volatile matter content of 75% by mass) as the component (B), 39 parts by mass of a polyester polyol ("PLAXEL 303" available from Daicel Chemical Industries Ltd., non-volatile matter content of 100% by mass) as the component (C), and 45 parts by mass of polyoxyethylene oleamide (non-volatile matter content of 100% by mass) as the component (D). The resulting mixture was further stirred to obtain a homogeneous anti-fogging solution (hereinafter referred to as Anti-fogging Solution 1).

Preparation Examples B-2 to B-19

<u>Preparation of anti-fogging solutions</u>:

Anti-fogging solutions were each prepared in the same manner as in Preparation Examples B-1 except for using the components shown in Table 3.

TABLE 3-1

| | | Preparation Examples | | | | | | | | |
|---|---|---|---|---|---|---|---|---|---|---|
| | | B-1 | B-2 | B-3 | B-4 | B-5 | B-6 | B-7 | B-8 | B-9 |
| Anti-fogging Solution | | 1 | 2 | 3 | 4 | 5 | 6 | 7 | 8 | 9 |
| (A) Resin component (part by mass) | Copolymer 1*1 | 451 | - | - | - | - | 285 | 577 | 537 | 366 |
| | Polymer 2*2 | - | 447 | - | - | - | - | - | - | - |
| | Copolymer 3*3 | - | - | 456 | - | - | - | - | - | - |
| | Copolymer 4*4 | - | - | - | 451 | - | - | - | - | - |
| | Copolymer 5*5 | - | - | - | - | 451 | - | - | - | - |

(continued)

| | | Preparation Examples | | | | | | | | |
|---|---|---|---|---|---|---|---|---|---|---|
| | | B-1 | B-2 | B-3 | B-4 | B-5 | B-6 | B-7 | B-8 | B-9 |
| (B) Organic isocyanate (part by mass) | SUMIDULE BL-3175*6 | 234 | 236 | 232 | 234 | 234 | 254 | 214 | 234 | 263 |
| (C) Polyol compound (part by mass) | PLAXEL 303*7 | 39 | 38 | 39 | 39 | 39 | 57 | 29 | - | 31 |
| | PLAXEL 305*8 | - | - | - | - | - | - | - | 46 | - |
| (D) Polyoxyethylene oleamide (part by mass) | | 45 | 45 | 45 | 45 | 45 | 45 | 45 | 21 | 88 |
| (F) Oxide particles (part by mass) | QUATRON PL-2L-PGME*9 | - | - | - | - | - | - | - | - | - |
| Solvent (part by mass) | Methoxypropanol | 231 | 234 | 228 | 231 | 231 | 359 | 135 | 162 | 252 |
| Percentage of functional groups of component (B) (NCO/OH)*10 | | 60 | 60 | 60 | 60 | 60 | 70 | 50 | 60 | 60 |
| Blending percentage of component (C) (% by mass)*11 | | 30 | 30 | 30 | 30 | 30 | 50 | 20 | 30 | 30 |
| Blending percentage of component (D) (% by mass)*12 | | 13 | 13 | 13 | 13 | 13 | 13 | 13 | 6 | 25 |
| Blending percentage of component (F) (% by mass)*13 | | 0 | 0 | 0 | 0 | 0 | 0 | 0 | 0 | 0 |

TABLE 3-2

| | | Preparation Examples | | | | | | | | | |
|---|---|---|---|---|---|---|---|---|---|---|---|
| | | B-10 | B-11 | B-12 | B-13 | B-14 | B-15 | B-16 | B-17 | B-18 | B-19 |
| Anti-fogging Solution | | 10 | 11 | 12 | 13 | 14 | 15 | 16 | 17 | 18 | 19 |
| (A) Resin component (part by mass) | Copolymer 1*1 | 429 | 442 | 406 | 271 | 548 | 510 | 347 | 662 | 179 | 623 |
| | Polymer 2*2 | - | - | - | - | - | - | - | - | - | - |
| | Copolymer 3*3 | - | - | - | - | - | - | - | - | - | - |
| | Copolymer 4*4 | - | - | - | - | - | - | - | - | - | - |
| | Copolymer 5*5 | - | - | - | - | - | - | - | - | - | - |
| (B) Organic isocyanate (part by mass) | SUMIDULE BL-3175*6 | 222 | 229 | 211 | 241 | 203 | 222 | 250 | 225 | 243 | 163 |
| (C) Polyol compound (part by mass) | PLAXEL 303*7 | 37 | 38 | 35 | 54 | 27 | - | 30 | | 86 | 55 |
| | PLAXEL 305*8 | - | - | - | - | - | 44 | - | - | - | - |
| (D) Polyoxyethylene oleamide (part by mass) | | 45 | 45 | 45 | 45 | 45 | 21 | 88 | 45 | 45 | 45 |

(continued)

| | | Preparation Examples | | | | | | | | | |
|---|---|---|---|---|---|---|---|---|---|---|---|
| | | B-10 | B-11 | B-12 | B-13 | B-14 | B-15 | B-16 | B-17 | B-18 | B-19 |
| (F) Oxide particles (part by mass) | QUATRON PL-2L-PGME*9 | 61 | 24 | 122 | 61 | 61 | 66 | 52 | - | - | - |
| Solvent (part by mass) | Methoxypropanol | 206 | 229 | 181 | 328 | 116 | 137 | 233 | 68 | 447 | 114 |
| Percentage of functional groups of component (B) (NCO/OH)*10 | | 60 | 60 | 60 | 70 | 50 | 60 | 60 | 60 | 60 | 30 |
| Blending percentage of component (C) (% by mass)*11 | | 30 | 30 | 30 | 50 | 20 | 30 | 30 | 0 | 70 | 30 |
| Blending percentage of component (D) (% by mass)*12 | | 13 | 13 | 13 | 13 | 13 | 6 | 25 | 13 | 13 | 13 |
| Blending percentage of component (F) (% by mass)*13 | | 5 | 2 | 10 | 5 | 5 | 5 | 5 | 0 | 0 | 0 |

*1: Copolymer 1; prepared in Preparation Example A-1, diluted with methoxypropanol to adjust a non-volatile matter content to 20% by mass
*2: Polymer 2; prepared in Preparation Example A-2, diluted with methoxypropanol to adjust a non-volatile matter content to 20% by mass
*3: Copolymer 3; prepared in Preparation Example A-3, diluted with methoxypropanol to adjust a non-volatile matter content to 20% by mass
*4: Copolymer 4; prepared in Preparation Example A-4, diluted with methoxypropanol to adjust a non-volatile matter content to 20% by mass
*5: Copolymer 5; prepared in Preparation Example A-5, diluted with methoxypropanol to adjust a non-volatile matter content to 20% by mass
*6: SUMIDULE BL3175; blocked isocyanate available from Sumika Bayer Urethane Co., Ltd., non-volatile matter content of 75% by mass
*7: PLAXEL 303; polyester polyol, weight-average molecular weight of 300, manufactured by Daicel Chemical Industries Ltd., non-volatile matter content of 100% by mass
*8: PLAXEL 305; polyester polyol, weight-average molecular weight of 500, available from Daicel Chemical Industries Ltd., non-volatile matter content of 100% by mass
*9: QUATRON 2L-PGME, colloidal silica dispersed in methoxypropanol, manufactured by Fuso Chemical Co., Ltd., non-volatile matter content of 25% by mass
*10: Proportion of the functional groups of the component (B) (calculated in terms of non-volatile matter content); total mole number of the functional groups (NCO groups) of the component (B) per 100 of a total mole number of the hydroxyl groups contained in the component (A) and the component (C)
*11: Blending percentage (% by mass) of the component (C) (in terms of non-volatile matter content); blending amount of the component (C) based on the total amount of the component (A) and the component (C)
*12: Blending percentage (% by mass) of the component (D) (in terms of non-volatile matter content); blending amount of the component (D) based on the total amount of the component (A), the component (B), the component (C) and the component (D)
*13: Blending percentage (% by mass) of the component (F) (in terms of non-volatile matter content); blending amount of the component (F) based on the total amount of the component (A), the component (B), the component (C) and the component (F)

Preparation Example C-1

Preparation of (E) component:

Nineteen parts by mass of distilled water and 3 parts by mass of acetic acid were gradually added under stirring to 42 parts by mass of epoxysilane (γ-glycidoxypropyl trimethoxysilane "A-187" available from Momentive Performance Materials Inc.) to thereby obtain a transparent solution. The resulting solution was then mixed with 35 parts by mass of methoxypropanol under stirring. The resulting mixture was further mixed with 1 part by mass of acetylacetone aluminum as a curing catalyst, and stirred until it became homogeneous, thereby obtaining an additive (hereinafter referred to as Additive 1) as the component (E).

Preparation Example C-2

Preparation of component (E):

An additive (hereinafter referred to as Additive 2) as the component (E) was prepared in the same manner as in Preparation Example C-1 except for changing the contents of distilled water and methoxypropanol as shown in Table 4.

Preparation Example C-3

Preparation of component (E):

An additive (hereinafter referred to as Additive 3) as the component (E) was prepared using the components shown in Table 4 such as water-dispersed colloidal silica ("SNOWTEX O-40" available from Nissan Chemical Industries, Ltd.).

TABLE 4

| | Preparation Examples | | |
|---|---|---|---|
| | C-1 | C-2 | C-3 |
| | Additive 1 | Additive 2 | Additive 3 |
| A-187 *14 | 42 | 42 | 25 |
| Distilled water | 19 | 5 | - |
| SNOWTEX O-40 *15 | - | - | 30 |
| Acetic acid | 3 | 3 | - |
| Methoxypropanol | 35 | 49 | 45 |
| Acetylacetone aluminum | 1 | 1 | - |
| Non-volatile matter content (% by mass) | 30 | 30 | 30 |
| Water addition mole number *16 | 6 times | 1.5 times | 9.5 times |

*14:A-187; γ-glycidoxypropyltrimethoxysilane available from Momentive Performance Materials Inc.
*15: SNOWTEX O-40; water-dispersed colloidal silica available from Nissan Chemical Industries, Ltd., silica content of 40% by mass
*16: Water addition mole number; water addition mole number based on the solids content.

Comparative Preparation Example C-4

To 4.23 g of tetraethoxysilane were added 7.32 g of distilled water, 6.52 mg of phosphoric acid and 910 mg of methanol. The resulting mixture was hydrolyzed under stirring at 40°C for 4 h to obtain a solution of a hydrolyzed product of an inorganic alkoxide (Comparative Additive 4). The Comparative Additive 4 had a non-volatile matter content of 0.58 g and a water addition amount of 20 mol based on 1 mol of the non-volatile matter.

Example 2

(1) Preparation of coating solution for anti-fogging treatment

As shown in Table 5, 100 parts by mass of the above-described Anti-fogging Liquid 1 were mixed with 5 parts by mass of the above-described Additive 1 under stirring to obtain a coating solution for anti-fogging treatment.

(2) Preparation of primer solution

A primer solution was obtained by mixing 1 part by mass of aminosilane ("KBM-903" available from Shin-Etsu Chemical Co., Ltd.) with 100 parts by mass of isopropanol under stirring.

(3) Preparation of anti-fogging article

A float glass (100×100×3.4 mm) cleaned with CERICO was prepared. The cleaning with CERICO was carried out by polishing the glass surface using a glass cleaner ("KEYROBIN" available from Takehara Co., Ltd.) in the form of a CERICO-containing paste, followed by rinsing with water. When pure water was dropped on the thus cleaned glass surface, the surface was found to be uniformly wet. Thus, it was confirmed that the water repellency completely disappeared.
The float glass was applied with 2 mL of the above-described primer solution and coated therewith by a spin coating method at 500 rpm. The coating was then dried in a hot wind dryer oven at 100°C for 5 min. After cooling, the primer coating was applied with 3 mL of the above-described coating solution for anti-fogging treatment and coated therewith by a spin coating method at 500 rpm. The obtained coating was then dried in a hot wind dryer oven at 150°C for 45 min to obtain a transparent glass having an anti-fogging coating film (anti-fogging article). The results of evaluation of the obtained glass by the above-described methods are shown in Table 5.
The anti-fogging coating film of the obtained glass was also subjected to a qualitative analysis using a field emission scanning electron microscope ("Model S-4700" available from Hitachi, Ltd.) to analyze the contents of C (carbon), Si (silicon) and O (oxygen) in the coating film. It was confirmed that contents of C, Si and O in the coating film were 65.2%, 0.9% and 25.3%, respectively.
Thus, the anti-fogging coating film of the obtained glass was found to contain C, Si and O components and to have anti-fogging property as shown in Table 5. Further, dissolution of the surfactant was detected in such a range that the residual percentage of the surfactant was from 20 to 75%. Therefore, it was confirmed that the coating film contained a surfactant and a hydrophilic organic material.

Examples 3 to 26

Transparent glasses having anti-fogging coating films (anti-fogging articles) were prepared in the same manner as described in Example 2 except for using the anti-fogging solutions and additives shown in Table 5. Each of the glasses obtained in these examples was evaluated in the same manner as in Example 2. The results are shown in Table 5.

Comparative Example 1

A glass having an anti-fogging coating film (anti-fogging article) was prepared in the same manner as described in Example 2 except for using 30 parts by mass of Comparative Additive 4 in place of Additive 1. The obtained glass was evaluated in the same manner as in Example 2. The results are shown in Table 5.

Comparative Example 2

A glass having an anti-fogging coating film (anti-fogging article) was prepared in the same manner as described in Example 2 except for using a coating solution for anti-fogging treatment composed only of Anti-fogging Solution 17 as shown in Table 5. The obtained glass was evaluated in the same manner as in Example 2. The results are shown in Table 5.

Comparative Example 3

A glass having an anti-fogging coating film (anti-fogging article) was prepared in the same manner as described in Example 2 except for using Anti-fogging Solution 17 in place of Anti-fogging Solution 1 of Example 2. The obtained glass was evaluated in the same manner as in Example 2. The results are shown in Table 5.

Comparative Example 4

A glass having an anti-fogging coating film (anti-fogging article) was prepared in the same manner as described in Example 2 except for using a coating solution for anti-fogging treatment composed only of Anti-fogging Solution 18 as shown in Table 5. The obtained glass was evaluated in the same manner as in Example 2. The results are shown in Table 5.

Comparative Example 5

A glass having an anti-fogging coating film (anti-fogging article) was prepared in the same manner as described in Example 2 except for using a coating solution for anti-fogging treatment composed only of Anti-fogging Solution 19 as shown in Table 5. The obtained glass was evaluated in the same manner as in Example 2. The results are shown in Table 5.

Comparative Example 6

A glass having an anti-fogging coating film (anti-fogging article) was prepared in the same manner as described in Example 15 except that Additive 1 was not added. The obtained glass was evaluated in the same manner as in Example 2. The results are shown in Table 5.

TABLE 5-1

| Examples | Anti-fogging Solution | | Additive | | | Initial Performance | | Retention of anti-fogging property | Wear resistance |
|---|---|---|---|---|---|---|---|---|---|
| | Kind | Amount (part by mass) | Kind | Amount (part by mass) | Non-volatile matter percentage*17 (part by mass) | Appearance | Resistance to Fogging by Exhalation | | |
| 2 | 1 | 100 | 1 | 5 | 4.3 | A | Not fogged | Not fogged | 2.2 |
| 3 | 1 | 100 | 1 | 0.7 | 0.6 | A | Not fogged | Not fogged | 5.3 |
| 4 | 1 | 100 | 1 | 10.4 | 9 | A | Not fogged | Not fogged | 2.5 |
| 5 | 1 | 100 | 2 | 5 | 4.3 | A | Not fogged | Not fogged | 2.8 |
| 6 | 1 | 100 | 3 | 5 | 4.3 | A | Not fogged | Not fogged | 2.3 |
| 7 | 2 | 100 | 1 | 5 | 4.3 | A | Not fogged | Not fogged | 2.9 |
| 8 | 3 | 100 | 1 | 5 | 4.3 | A | Not fogged | Not fogged | 3.1 |
| 9 | 4 | 100 | 1 | 5 | 4.3 | A | Not fogged | Not fogged | 2.9 |
| 10 | 5 | 100 | 1 | 5 | 4.3 | A | Not fogged | Not fogged | 2.4 |
| 11 | 6 | 100 | 1 | 5 | 4.3 | A | Not fogged | Not fogged | 2.2 |
| 12 | 7 | 100 | 1 | 5 | 4.3 | A | Not fogged | Not fogged | 2.6 |
| 13 | 8 | 100 | 1 | 5 | 4.3 | A | Not fogged | Not fogged | 1.8 |
| 14 | 9 | 100 | 1 | 5 | 4.3 | A | Not fogged | Not fogged | 5.1 |
| 15 | 10 | 100 | 1 | 4 | 3.4 | A | Not fogged | Not fogged | 2.1 |
| 16 | 10 | 100 | 1 | 0.8 | 0.7 | A | Not fogged | Not fogged | 4.8 |

TABLE 5-2

| Example | Anti-fogging Solution | | | Additive | | Initial Performance | | Retention of anti-fogging property | Wear resistance |
|---|---|---|---|---|---|---|---|---|---|
| | Kind | Amount (part by mass) | Kind | Amount (part by mass) | Non-volatile matter percentage*17 (part by mass) | Appearance | Resistance to Fogging by Exhalation | | |
| 17 | 10 | 100 | 1 | 8 | 6.9 | A | Not fogged | Not fogged | 3 |
| 18 | 10 | 100 | 2 | 4 | 3.4 | A | Not fogged | Not fogged | 2.9 |
| 19 | 10 | 100 | 3 | 4 | 3.4 | A | Not fogged | Not fogged | 2.5 |
| 20 | 11 | 100 | 1 | 4 | 3.4 | A | Not fogged | Not fogged | 4.3 |
| 21 | 12 | 100 | 1 | 4 | 3.4 | A | Not fogged | Not fogged | 2.3 |
| 22 | 13 | 100 | 1 | 4 | 3.4 | A | Not fogged | Not fogged | 2 |
| 23 | 14 | 100 | 1 | 4 | 3.4 | A | Not fogged | Not fogged | 2.7 |
| 24 | 15 | 100 | 1 | 4 | 3.4 | A | Not fogged | Not fogged | 1.9 |
| 25 | 16 | 100 | 1 | 4 | 3.4 | A | Not fogged | Not fogged | 5.2 |
| 26 | 1 | 100 | 1 | 0.5 | 0.4 | A | Not fogged | Not fogged | 8.5 |
| Comp. Ex. 1 | 1 | 100 | 4*18 | 30 | 4 | A | Not fogged | Fogged | 3 |
| Comp. Ex. 2 | 17 | 100 | - | - | - | A | Not fogged | Not fogged | 6.6 |
| Comp. Ex. 3 | 17 | 100 | 1 | 5 | 4.3 | A | Not fogged | Not fogged | 2 |
| Comp. Ex. 4 | 18 | 100 | - | - | - | A | Not fogged | Not fogged | Peel |
| Comp. Ex. 5 | 19 | 100 | - | - | - | A | Not fogged | Not fogged | Peel |
| Comp. Ex. 6 | 10 | 100 | - | - | - | A | Not fogged | Not fogged | 10 |

TABLE 5-3

| Example | Surfactant Residual percentage (%) | Fastness | | | | Chemical resistance | | | | Stability | | | |
|---|---|---|---|---|---|---|---|---|---|---|---|---|---|
| | | Dry cloth | | Wet cloth | | Acid | | Alkali | | High humidity and temperature | | Low temperature | |
| | | App 1) | Exh 2) | App | Exh | App | Exh | App | Exh | App | Exh | App | Exh |
| 2 | 45 | A | A | A | A | A | A | A | A | A | A | A | A |
| 3 | 70 | A | A | A | A | A | A | A | A | A | A | A | A |
| 4 | 20 | A | A | A | A | A | A | A | A | A | A | A | A |
| 5 | 58 | A | A | A | A | A | A | A | A | A | A | A | A |
| 6 | 33 | A | A | A | A | A | A | A | A | A | A | A | A |
| 7 | - | A | A | A | A | A | A | A | A | A | A | A | A |
| 8 | - | A | A | A | A | A | A | A | A | A | A | A | A |
| 9 | - | A | A | A | A | A | A | A | A | A | A | A | A |
| 10 | - | A | A | A | A | A | A | A | A | A | A | A | A |
| 11 | 47 | A | A | A | A | A | A | A | A | A | A | A | A |
| 12 | 40 | A | A | A | A | A | A | A | A | A | A | A | A |
| 13 | - | A | A | A | A | A | A | A | A | A | A | A | A |
| 14 | - | A | A | A | A | A | A | A | A | A | A | A | A |
| 15 | 41 | A | A | A | A | A | A | A | A | A | A | A | A |
| 16 | 57 | A | A | A | A | A | A | A | A | A | A | A | A |

Note 1) Appearance; 2) Resistance to fogging by exhalation

TABLE 5-4

| Example | Surfactant Residual percentage (%) | Fastness | | | | Chemical resistance | | | | Stability | | | |
|---|---|---|---|---|---|---|---|---|---|---|---|---|---|
| | | Dry cloth | | Wet cloth | | Acid | | Alkali | | High humidity and temperature | | Low temperature | |
| | | App 1) | Exh 2) | App | Exh | App | Exh | App | Exh | App | Exh | App | Exh |
| 17 | 33 | A | A | A | A | A | A | A | A | A | A | A | A |
| 18 | 60 | A | A | A | A | A | A | A | A | A | A | A | A |
| 19 | 31 | A | A | A | A | A | A | A | A | A | A | A | A |
| 20 | 43 | A | A | A | A | A | A | A | A | A | A | A | A |
| 21 | 45 | A | A | A | A | A | A | A | A | A | A | A | A |
| 22 | 32 | A | A | A | A | A | A | A | A | A | A | A | A |
| 23 | 28 | A | A | A | A | A | A | A | A | A | A | A | A |
| 24 | - | A | A | A | A | A | A | A | A | A | A | A | A |
| 25 | - | A | A | A | A | A | A | A | A | A | A | A | A |
| 26 | 40 | A | A | A | A | A | A | A | A | A | A | A | A |
| Comp. Ex. 1 | 91 | - | - | - | - | - | - | - | - | - | - | - | - |
| Comp. Ex. 2 | 85 | A | A | A | B | A | B | A | B | A | A | A | A |
| Comp. Ex. 3 | 82 | A | A | A | B | A | B | A | B | A | A | A | A |
| Comp. Ex. 4 | 9 | A | A | A | B | A | B | A | B | A | A | A | A |
| Comp. Ex. 5 | 1 or less | A | A | A | B | A | B | A | B | A | B | A | A |
| Comp. Ex. 6 | 59 | A | A | A | A | A | A | A | A | A | A | A | A |

Note 1) Appearance; 2) Resistance to fogging by exhalation
*17: Non-volatile matter percentage (% by mass); Percentage of the component (E) in terms of the non-volatile matter based on 100 parts by mass of the total amount of the component (A), the component (B), the component (C), the component (D) and the component (F)
*18: Additive 4; solution of the hydrolyzed product of the inorganic alkoxide prepared in the above Comparative Preparation Example 4 (Comparative Additive 4)

INDUSTRIAL APPLICABILITY

The automobile window material of the present invention is configured to be affixed to an opening of an automobile, and provided on its surface facing to an interior of the automobile with a coating film which contains a surfactant capable of adsorbing and holding water vapor and a hydrophilic organic material. Therefore, the window material can be prevented from suffering from fogging even when exposed to outside air having a considerably low temperature. Namely, the present invention provides an automobile window material which hardly suffers from fogging even when exposed to a condition in which the outside air temperature is considerably low, as well as an automobile having such a window material.

## Claims

1. An automobile window material configured to be affixed to an opening of an automobile, comprising a substrate, and a coating film provided on a surface of the substrate which faces to an interior of the automobile when affixed to the opening of the automobile, said coating film comprising a surfactant capable of adsorbing and holding water vapor, and a hydrophilic organic material.

2. The automobile window material according to claim 1, wherein the hydrophilic organic material comprises a resin component containing a silicon atom to which at least one carbon atom and at least one oxygen atom are bonded, the surfactant has an HLB value of 10 or more, and at least a part of the surfactant is present on a surface of the coating film.

3. The automobile window material according to claim 1 or 2, wherein a difference in haze value due to abrasion which is obtained by subtracting a haze value of the automobile window material before an abrasion test from a haze value thereof after the abrasion test is 6% or less, said abrasion test being performed with respect to a surface of the coating film in accordance with JIS R3212, paragraph 3.7 at a load of 2.45 N and a revolution number of 500, and wherein the automobile window material has a residual percentage of the surfactant of 20 to 75% when immersed in water at 40°C for 1 h.

4. The automobile window material according to any one of claims 1 to 3, wherein the substrate has a laminated structure in which a resin and glass plates are laminated.

5. The automobile window material according to claim 4, wherein the resin has a thickness of 1 mm or more and 5 mm or less.

6. The automobile window material according to claim 4 or 5, wherein the laminated structure is a laminated glass structure which comprises two glass plates laminated through an intermediate film of the resin.

7. The automobile window material according to claim 6, wherein a thickness of the portion of the intermediate film which is located on an upper side thereof when the window material is affixed to the automobile is larger by 0.1 mm or more than a thickness of a portion of the intermediate film which is located on a lower side thereof when the window material is affixed to the automobile.

8. The automobile window material according to any one of claims 4 to 7, wherein at least a part of the resin is a polycarbonate.

9. The automobile window material according to any one of claims 1 to 8, wherein a capacity of the coating film for adsorbing and holding water vapor is not smaller than the amount of water vapor that condenses on a coating film forming surface when an absolute temperature on the coating film forming surface is lower by 0.0001 kg/kg D. A. than an absolute temperature T (kg/kg D. A.) of an ambient atmosphere on the side of the coating film forming surface, and the capacity of the coating film is not larger than the amount of water vapor that condenses on the coating film forming surface when the absolute temperature on the coating film forming surface is lower by 0.0030 kg/kg D. A. than the absolute temperature T.

10. An automobile comprising a windshield and a front door window which are formed of the window material as defined in any one of claims 1 to 9.

11. A coating solution for anti-fogging treatment, comprising a surfactant capable of adsorbing and holding water vapor, and a hydrophilic organic material.

12. The coating solution for anti-fogging treatment according to claim 11, wherein the surfactant capable of adsorbing and holding water vapor is (D) a surfactant having an HLB value of 10 or more, and said hydrophilic organic material is (A) a resin component comprising a homopolymer having repeating units represented by the following formula (1):

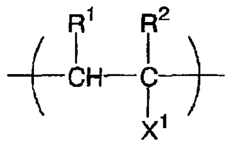

(1)

wherein $R^1$ and $R^2$ each independently represent a hydrogen atom or a $C_1$ to $C_5$ alkyl group; and $X^1$ is an aliphatic group which has a hydroxyl group and which may be interrupted by an oxygen atom,
or a copolymer containing 70 mol% or more of repeating units represented by the above formula (1) and 30 mol% or less of repeating units represented by at least one of the following formulae (2) to (5):

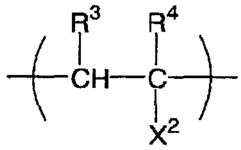

(2)

wherein $R^3$ and $R^4$ each independently represent a hydrogen atom or a $C_1$ to $C_5$ alkyl group; and $X^2$ represents an aliphatic group having an epoxy group,

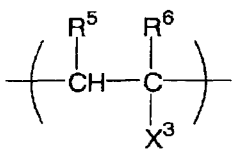

(3)

wherein $R^5$ and $R^6$ each independently represent a hydrogen atom or a $C_1$ to $C_5$ alkyl group; and $X^3$ represents an alkoxycarbonyl group, an alkyl ether group, an alkynyl ether group, an alkenyl ether group or a tetrahydrofurfuryl group,

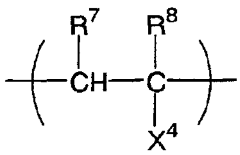

(4)

wherein $R^7$ and $R^8$ each independently represent a hydrogen atom or a $C_1$ to $C_5$ alkyl group; and $X^4$ represents a carboxyl group or an aliphatic group having a carboxyl group,

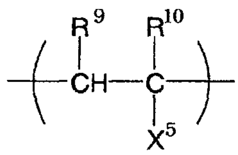

(5)

wherein $R^9$ and $R^{10}$ each independently represent a hydrogen atom or a $C_1$ to $C_5$ alkyl group; and $X^5$ represents an amide group, an amino group or an aliphatic group having an amide group or an amino group.

**13.** The coating solution for anti-fogging treatment according to claim 12, further comprising (B) an organic isocyanate, (C) a polyol compound having a molecular weight of 1,000 or less, and (E) a partially hydrolyzed condensate of an organoalkoxysilane.

**14.** The coating solution for anti-fogging treatment according to claim 13, wherein the component (B) is a blocked isocyanate.

**15.** The coating solution for anti-fogging treatment according to claim 13 or 14, wherein the component (C) is at least one compound selected from the group consisting of polyester polyols, polyether polyols, acrylic polyols, short chain polyols, polycarbonate polyols and polycaprolactone polyols.

**16.** The coating solution for anti-fogging treatment as recited in any one of claims 13 to 15, wherein the component (E) is a compound represented by the following formula (8):

$$R^{19}_{x}Si(OR^{20})_{4-x} \qquad (8)$$

wherein $R^{19}$ represents an organic group having a $C_1$ to $C_8$ epoxy group; $R^{20}$ represents a $C_1$ to $C_5$ alkyl group or a $C_2$ to $C_4$ acyl group and x is 1.

**17.** The coating solution for anti-fogging treatment according to any one of claims 13 to 16, wherein a total mole number of the functional groups in the component (B) is from 40 to 90 on the basis of 100 of a total mole number of the hydroxyl groups contained in the component (A) and the component (C).

**18.** The coating solution for anti-fogging treatment according to any one of claims 13 to 17, wherein the component (C) is present in an amount of from 15 to 60% by mass on the basis of a total amount of the component (A) and the component (C).

**19.** The coating solution for anti-foggzng treatment according to any one of claims 13 to 18, wherein the component (D) is at least one surfactant selected from the group consisting of polyoxyethylene alkyl ether surfactants, polyoxyethylene alkylamine surfactants and polyoxyethylene alkylamide surfactants.

**20.** The coating solution for anti-fogging treatment according to any one of claims 13 to 19, further comprising (F) oxide particles.

**21.** An anti-fogging article having an anti-fogging coating film obtained by crosslinking a coating film comprising:

(A) a resin component which is a homopolymer of repeating units represented by the above formula (1) or a copolymer containing 70 mol% or more of repeating units represented by the above formula (1) and 30 mol% or less of repeating units represented by at least one of the above formulae (2) to (5);
(B) an organic isocyanate;
(C) a polyol compound having a molecular weight of 1,000 or less;
(D) a surfactant having an HLB value of 10 or more; and
(E) a partially hydrolyzed condensate of an organoalkoxysilane.

**22.** An anti-fogging article comprising a substrate, and an anti-fogging coating film which comprises a resin component containing a silicon atom to which at least one carbon atom and at least one oxygen atom are bonded, and a surfactant having an HLB value of 10 or more, at least a part of the surfactant being present on a surface of the coating film.

**23.** The anti-fogging article according to claim 21 or 22, wherein a difference in haze value due to abrasion which is obtained by subtracting a haze value of the anti-fogging article before an abrasion test from a haze value thereof after the abrasion test is 6% or less, said abrasion test being performed with respect to a surface of the anti-fogging coating film in accordance with JIS R3212, paragraph 3.7 at a load of 2.45 N and a revolution number of 500, and wherein the anti-fogging article has a residual percentage of the surfactant of 20 to 75% when immersed in water at 40°C for 1 h.

Fig. 1

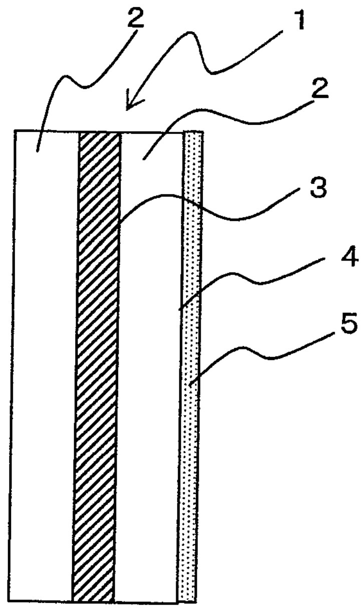

Fig. 2

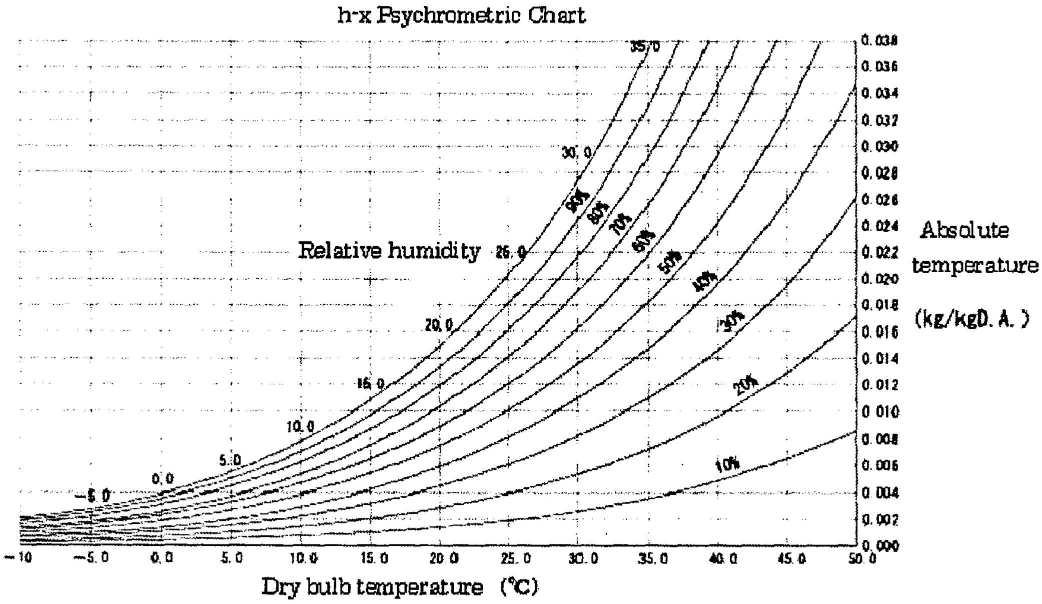
h-x Psychrometric Chart
Relative humidity
Absolute temperature
(kg/kgD. A.)
Dry bulb temperature (℃)
90%
80%
70%
60%
50%
40%
30%
20%
10%

Fig. 3

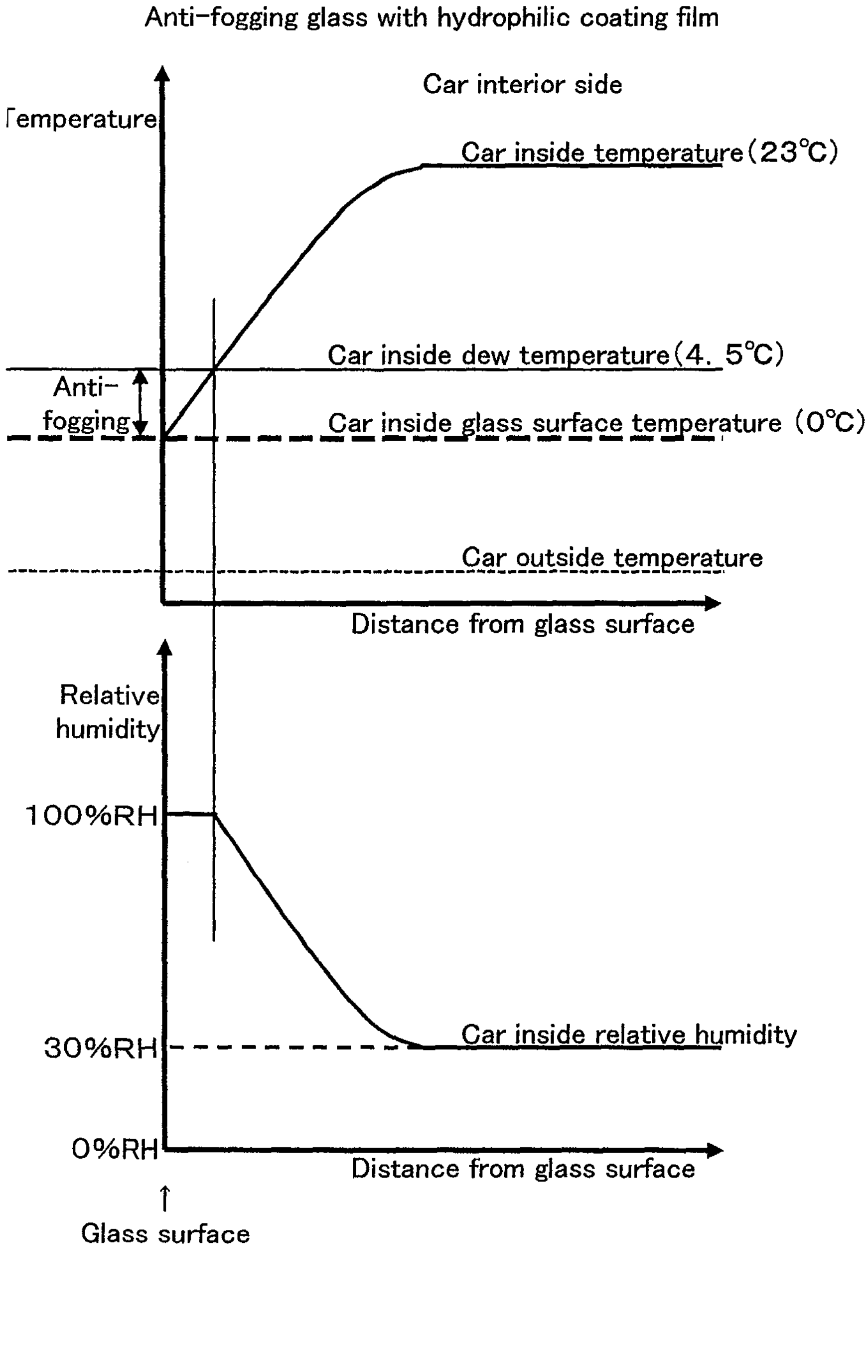
Anti-fogging glass with hydrophilic coating film
Car interior side
Temperature
Car inside temperature (23°C)
Car inside dew temperature (4. 5°C)
Anti-fogging
Car inside glass surface temperature (0°C)
Car outside temperature
Distance from glass surface
Relative humidity
100%RH
30%RH
0%RH
Car inside relative humidity
Distance from glass surface
Glass surface

Fig. 4

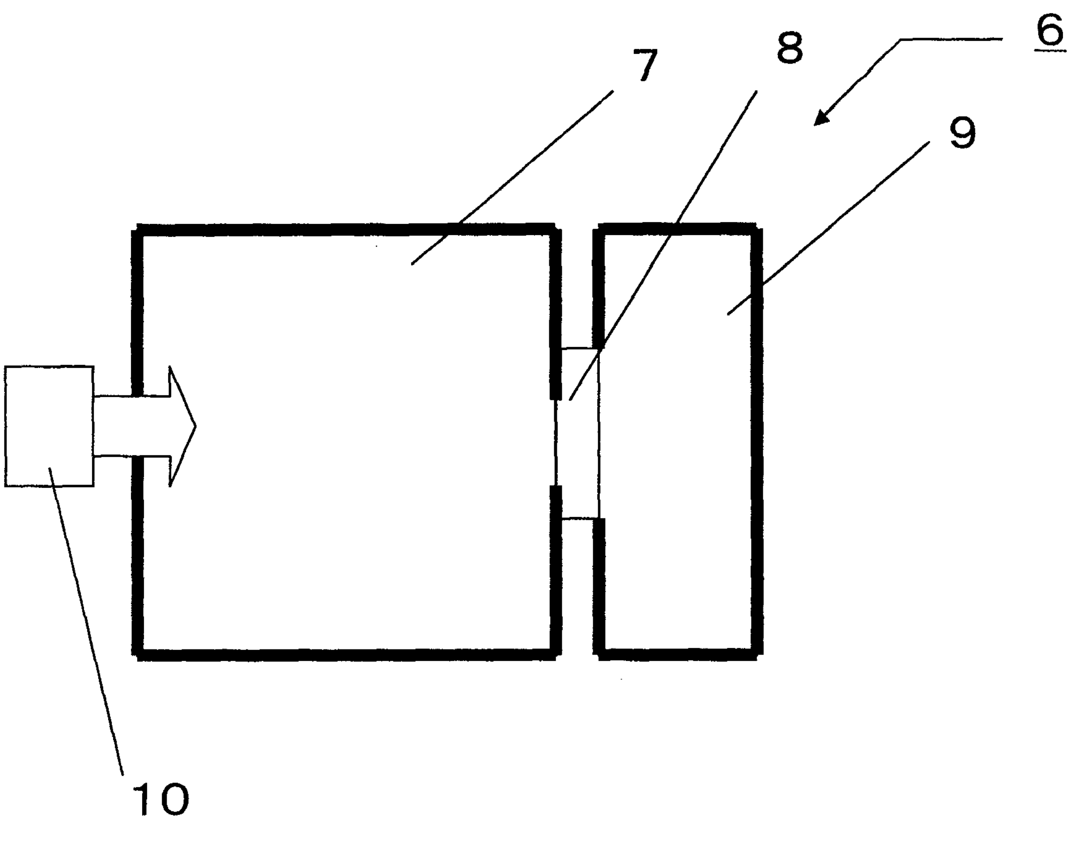

**INTERNATIONAL SEARCH REPORT**

International application No.
PCT/JP2008/054319

A. CLASSIFICATION OF SUBJECT MATTER
*B32B17/06*(2006.01)i, *B32B17/10*(2006.01)i, *B60J1/00*(2006.01)i, *B60S1/02*(2006.01)i, *C03C17/28*(2006.01)i, *C03C27/12*(2006.01)i, *C09D7/12*(2006.01)i, *C09D183/06*(2006.01)i

According to International Patent Classification (IPC) or to both national classification and IPC

B. FIELDS SEARCHED

Minimum documentation searched (classification system followed by classification symbols)
B32B1/00-43/00, B60J1/00, B60S1/02, C03C17/28, C03C27/12, C09D7/12, C09D183/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-001056 A (Asahi Glass Co., Ltd.), 05 January, 2006 (05.01.06), Claims; Par. Nos. [0003], [0054], [0067] (Family: none) | 1-10,21-23 |
| X<br>Y | JP 2006-225614 A (SDC Technologies-Asia, Ltd.), 31 August, 2006 (31.08.06), Claims; Par. Nos. [0004], [0039] to [0050], [0057] & WO 2006/088257 A1 | 11,12<br>1-10,13-23 |
| Y | JP 8-156187 A (Takiron Co., Ltd.), 18 June, 1996 (18.06.96), Par. Nos. [0001], [0015] (Family: none) | 5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 April, 2008 (11.04.08) | 01 May, 2008 (01.05.08) |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/054319

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-265239 A (Nippon Sheet Glass Co., Ltd.), 18 September, 2002 (18.09.02), Par. Nos. [0021] to [0024] (Family: none) | 7 |
| Y | JP 5-315061 A (Asahi Glass Co., Ltd.), 26 November, 1993 (26.11.93), Par. No. [0040] (Family: none) | 7 |
| Y | JP 2005-29723 A (Central Glass Co., Ltd.), 03 February, 2005 (03.02.05), Par. Nos. [0020] to [0025] & US 2006/0047064 A1 & WO 2004/013063 A1 | 13-21 |
| A | JP 2006-169440 A (Central Glass Co., Ltd.), 29 June, 2006 (29.06.06), Par. Nos. [0019] to [0030] & EP 1801174 A1 & WO 2006/064904 A1 | 13-21 |

Form PCT/ISA/210 (continuation of second sheet) (April 2007)

**INTERNATIONAL SEARCH REPORT**

International application No.
PCT/JP2008/054319

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The matter common to the inventions of claims 1, 11, 21 and 22 is to contain a hydrophilic organic material and a surfactant capable of adsorption and retention of steam, having antifog properties.

However, search has revealed that to contain a hydrophilic organic material and a surfactant capable of adsorption and retention of steam, having antifog properties is not novel as disclosed in the reference JP 2006-225614 A (..........) 31 August, 2006 (31.08.06), [Claims].

Consequently, as to contain a hydrophilic organic material and a surfactant capable of adsorption and retention of steam, having antifog properties (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.
PCT/JP2008/054319

Continuation of Box No.III of continuation of first sheet(2)

falls within the category of prior art, the common matter is not a special technical feature within the meaning of PCT Rule 13.2, second sentence.

Therefore, it is apparent that the inventions of claims 1, 11, 21 and 22 do not satisfy the requirement of unity of invention.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006137648 A
- JP 2006001056 A
- JP 2006225614 A
- JP 2005029723 A
- JP 2006169440 A
- JP 2006306995 A